# EUROPEAN PATENT SPECIFICATION

(11) **EP 3 927 493 B1**
(45) Date of publication and mention of the grant of the patent: **04.03.2026**
(21) Application number: 20759032.4
(22) Date of filing: 14.02.2020
(51) Int. Cl.: B24B 45/00, B23Q 3/155, B24B 27/00, B24D 9/08, B24B 41/04, B24B 23/00

(54) **A DEVICE FOR CHANGING ABRADING PRODUCTS**
VORRICHTUNG ZUM WECHSELN VON SCHLEIFPRODUKTEN
DISPOSITIF POUR CHANGER DES PRODUITS ABRASIFS

(30) Priority: 20.02.2019 FI 20195131
(43) Date of publication of application: 29.12.2021
(73) Proprietor: Mirka Ltd, 66850 Jepua (FI)
(72) Inventor: NORDSTRÖM, Caj, 66850 Jeppo (FI); KAHARI, Jani, 65100 Vasa (FI); STORBJÖRK, Andreas, 65610 Korsholm (FI)
(74) Representative: Berggren Oy
(86) International application number: PCT/FI2020/050094
(87) International publication number: WO 2020/169882

(56) References cited:
- WO-A1-2015/125068
- WO-A1-2017/174512
- AT-B1- 512 464
- CN-A- 107 214 620
- CN-A- 107 214 620
- US-A1- 2004 048 549
- US-A1- 2004 048 549
- US-A1- 2015 328 734
- US-A1- 2019 001 460

## Description

### FIELD

The solution relates to abrading with an abrading tool, and particularly to changing abrading products for abrading tools.

### BACKGROUND

From CN 107 214 620 A there is known a detacher and a method for detaching an abrading product from an abrading tool, as defined in the preambles of the independent claims.

In abrading, abrading products such as abrasive articles and interface pads have to be periodically changed for fresh ones because, during abrading, abrading products are subject to wear, with the result of deterioration in their performance.

Such changing of abrasive articles reduces the output of the abrading process because the abrading process needs to be halted for the duration of changing the worn abrading product(s). Therefore, there is a need for more rapid changing of abrading products in order to improve the productivity of abrading.

Furthermore, especially in robotized or otherwise automated abrading, there is a burden for a human operator to stay available to change an abrading product upon demand by the automated abrading process, which causes burden for the human operator. Or, even if some mechanical assistance was to be available in relieving some such human burden, the human operator is required to adjust such mechanical assistance in accordance of different abrading products required in the process, such as in accordance with different thicknesses of the abrading products changed and/or ensuring proper alignment of aperture patterns in the abrading products and the gripping means on the abrading tool receiving the fresh abrading product - which causes burden for the human operator.

Moreover, such abrading increasingly employs net-based abrading articles with no apertures, which may be used in the same process with abrading products comprising apertures - possibly with a variety of aperture patterns - which entails that any mechanical assistances in the changing of an abrading process specifically designed for a particular aperture pattern are useless in the case of another kind of an aperture pattern or an abrading product with no apertures.

Due to one or more of such deficiencies, fully robotized or otherwise automated abrading process, especially such that utilizes a repertoire of different abrading products with and without apertures in the process, is not possible.

It is an object of the disclosed solution to overcome such problems as outlined above.

### SUMMARY OF THE DISCLOSED SOLUTION

The invention is directed to a detacher and to a method for detaching an abrading product from an abrading tool, as defined in the independent claims. Further embodiments are defined in the dependent claims.

### BRIEF DESRCIPTON OF THE FIGURES

Figure 1a schematically illustrates, according to an example, a device for changing abrading products, the device comprising an abrading product detacher and an abrading product attacher.
Figure 1b schematically illustrates, the device of Figure 1a with an abrading tool-equipped robot utilizing the abrading product exchanger system.
Figure 2 schematically illustrates, according to an example, an abrading product detacher as viewed from diagonally from the front.
Figure 3 schematically illustrates the abrading product detacher of Figure 2 as viewed from below.
Figure 4 schematically illustrates, according to an example, and abrading tool equipped with abrading product(s) detachable with an abrading product detacher and attachable with an abrading product attacher according to the disclosed solution.
Figures 5a-5h schematically illustrate, according to an example, stepwise progression of detaching an abrading product, from an abrading tool, with the detacher of Figure 2, as illustrated from diagonally from the front.
Figures 6a-6c schematically illustrate, in the case of the detacher of Figure 2, the relative movement of a blade and a table, as viewed from a side.
Figures 7a-7c schematically illustrate, in the case of the detacher of Figure 2, the relative movement of a table and a base, as viewed from a side.
Figures 8a-8d schematically illustrate, according to an example, different distances between the blade and the table of a detacher, in conjunction with detaching different abrading products of different thicknesses, as viewed from a side.
Figure 9 schematically illustrates, according to an example, an abrading product attacher, as viewed diagonally from the front.
Figure 10 schematically illustrates, according to an example, a magazine of an abrading product attacher, as viewed diagonally from behind.
Figure 11a schematically illustrates, according to an example, a camera and flash arrangement, together with a blinder arrangement, of an abrading product attacher, as viewed diagonally from the front.
Figure 11b schematically illustrates the lower blinder arrangement of Figure 11a as attached to a gripping device, as viewed diagonally from behind.
Figures 12a-12c schematically illustrate, according to an example, a loading device of an abrading product attacher in different operational states, and as viewed diagonally from the front.
Figures 13a-13b schematically illustrate, according to an example, a gripping device of an abrading product attacher in different operational states, and as viewed diagonally from the behind.
Figures 14a-14d schematically illustrate, according to an example, the stepwise interaction between the gripping device of Figures 13a-13b and the magazine of Figure 10 in the gripper picking up an abrading product from the magazine, as viewed diagonally from the front.
Figures 15a-15d schematically illustrate, according to an example, the stepwise interaction between the gripping device of Figures 13a-13b and the loading device of Figures 12a-12c in the gripper delivering an abrading product to the loading device, as viewed diagonally from the front.
Figures 16a-16d schematically illustrate, according to an example, the stepwise interaction between an abrading tool and the loading device of Figures 12a-12c in the abrading tool picking up an abrading product from the loading device, as viewed diagonally from the front, and with the possible device having the abrading tool omitted for illustrative clarity.
Figures 17a-17h schematically illustrate, according to an example, an operating cycle for the abrading product attacher of Figure 9 in providing an abrading tool with an abrading product, as viewed diagonally from the front.

The figures are intended for illustrating the idea of the disclosed solution. Therefore, the figures are not in scale or suggestive of a definite layout of system components.

### DETAILED DESCRIPTION OF THE INVENTION

In the text, reference is made to the figures with the following numerals and denotations:
- **1**: Device, for changing abrading products
- **2**: Detacher
- **3**: Attacher
- **4**: Abrading tool
- **5**: Robot
- **10**: Table
- **11**: Base
- **12**: Outer column
- **13**: Inner column
- **14**: Blade
- **15**: Tip, of blade
- **16**: Motor
- **17**: Spring
- **18**: Shaft
- **19**: Linear guide
- **20**: Communications interface
- **21**: Power supply socket
- **22**: Bumper
- **30**: Abrading product
- **31**: Abrasive article
- **32**: Interface pad
- **33**: Backing pad
- **34**: Gripping means
- **40**: Magazine
- **41**: Plunger
- **42**: Linear actuator
- **43**: Support, of magazine
- **44**: Housing, of magazine
- **45**: Movement-resisting element
- **46**: Supply opening, of housing
- **47**: Dispensing opening, of housing
- **48**: Shaft
- **50**: Gripping device
- **51**: Gripping plate
- **52**: Gripping element
- **53**: Arm, of gripping device
- **54**: First motion actuator
- **55**: Second motion actuator
- **60**: Frame
- **61**: Auxiliary frame
- **62**: Linear guide
- **70**: Camera
- **71**: Flash
- **72**: Upper blinder
- **73**: Lower blinder
- **80**: Loading device
- **81**: Collar element
- **82**: Plunger
- **83**: Support, of loading device
- **84**: Housing, of loading device
- **85**: Aperture
- **86**: Sensor
- **90**: Instructions-giving device
- **91**: Communication pathway
- **d**: Distance, between blade and table
- **d₁, d₂, d₃...**: Certain distances, between blade and table
- **dₘₐₓ**: Maximum distance, between blade and table
- **dₘᵢₙ**: Minimum distance, between blade and table
- **h**: Distance, between table and base
- **h₁, h₂, h₃...**: Distances, between table and base, each with certain magnitude
- **hₘₐₓ**: Maximum distance, between table and base
- **hₘᵢₙ**: Minimum distance, between table and base
- **t**: Thickness, of abrading product
- **t₁, t₂, t₃...**: Thicknesses, of abrading product, each with certain magnitude
- **F**: Force
- **F₁, F₂**: Forces, each with certain magnitude
- **X, Y, Z**: Orthogonal coordinates in the frame of a device for changing abrading products

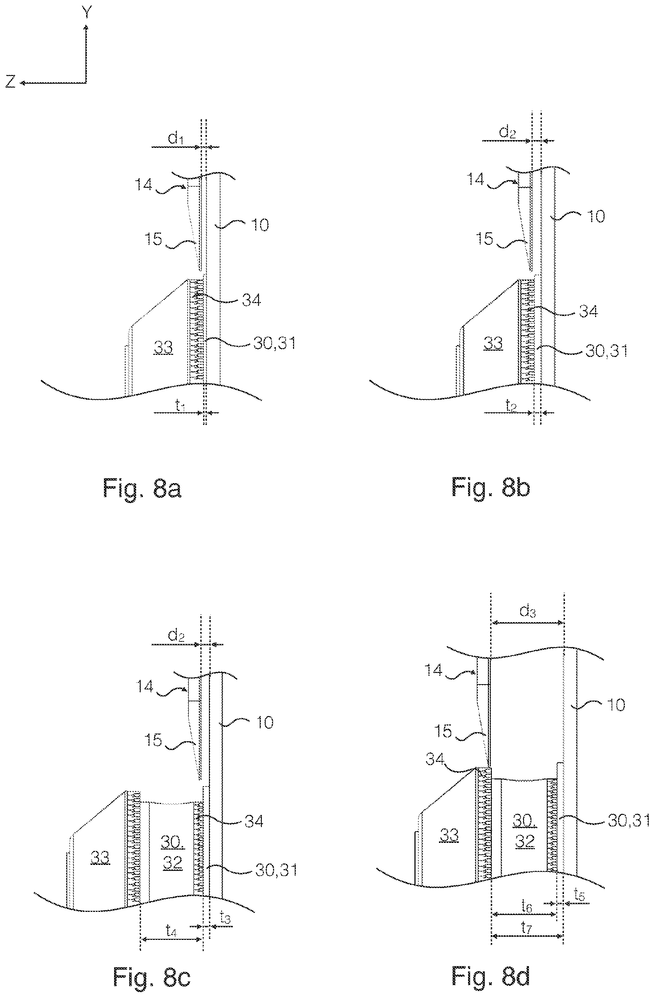

As a terminological note, the notion "abrading product" refers, through the text, to such products **30** which are consumed and therefore replaced during an abrading process. As typical examples, abrading products comprise abrasive articles **31** such as abrasive discs - perforated, non-perforated, abrading nets or the like - and interface pads **32** often used between backing pads **33** and abrasive articles **31.** It is to be realized that different abrading products **30** are consumed at different rates and therefore require replacement at different rates. For example, an interface pad **32** may require replacement after ten abrasive articles **31** have been consumed as attached, one after another, to the interface pad **32.** Moreover, in the context of detaching and/or attaching in the sense of the disclosed solution, an "abrading product" **30** may be an aggregate of individual abrading products **30,** such as an aggregate of an abrasive article **31** and an interface pad **32** which may be detached and/or attached together as illustrated in Fig. **8***d* in the case of detaching. The functions of abrasive articles **31,** interface pads **32** and backing pads **33** are conventional and well known for a person skilled in the art, and therefore are not discussed here.

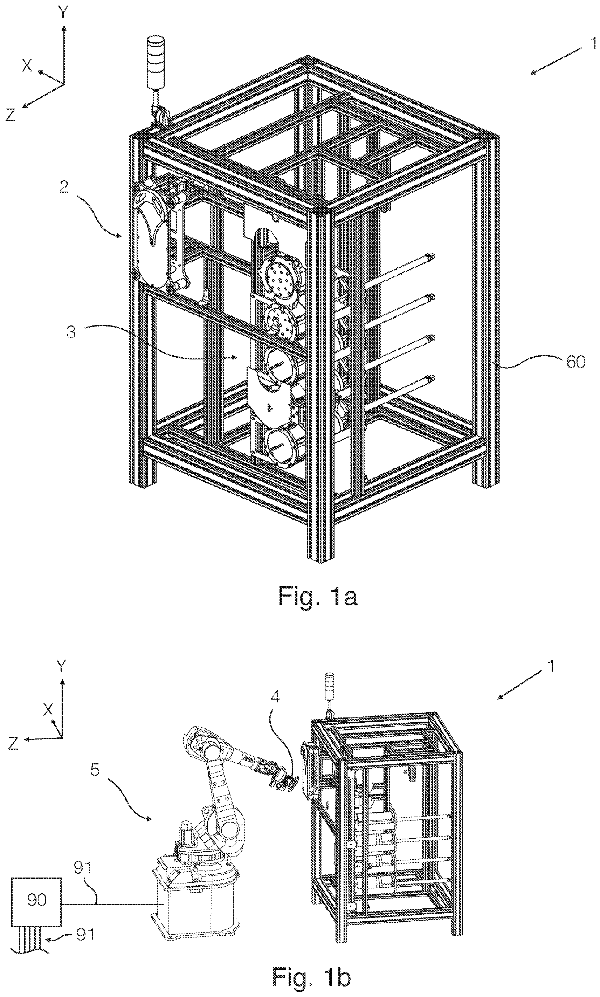

As another terminological note, throughout the text the notion of "front", and equivalent, refers to that side of the system elements which is towards the viewer along the **Z** axis in Fig. **1** when the system components are mounted in those positions as seen in Fig. **1****.** Correspondingly, the notion of "up", and equivalent, refers to the upward direction along the **Y** axis Fig. **1***a.*

Fig. **1***a* illustrates, according to an example, an abrading product exchange system **1** according to the disclosed solution.

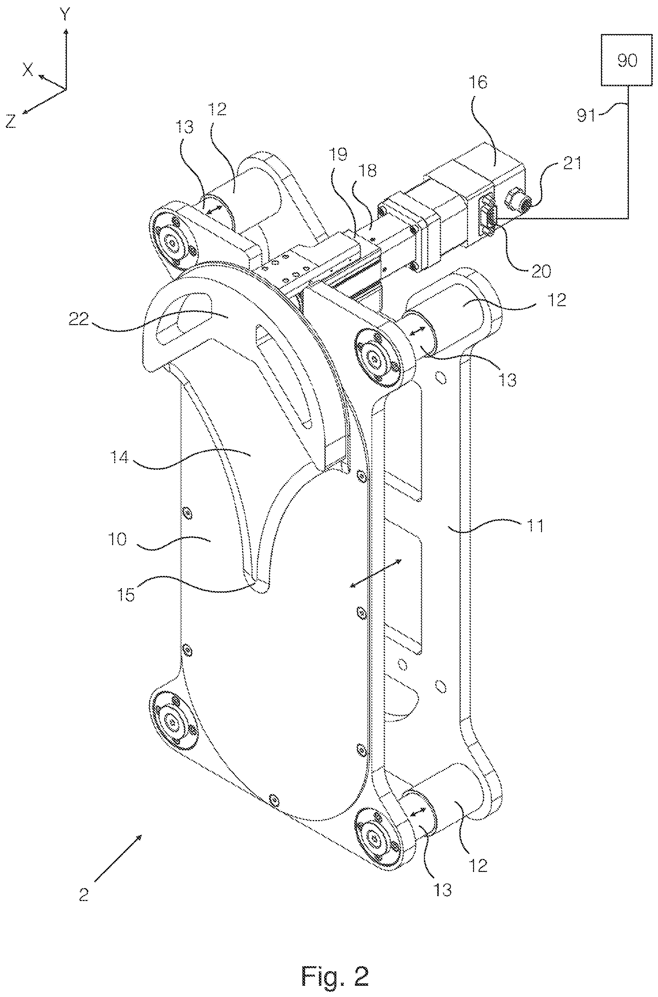

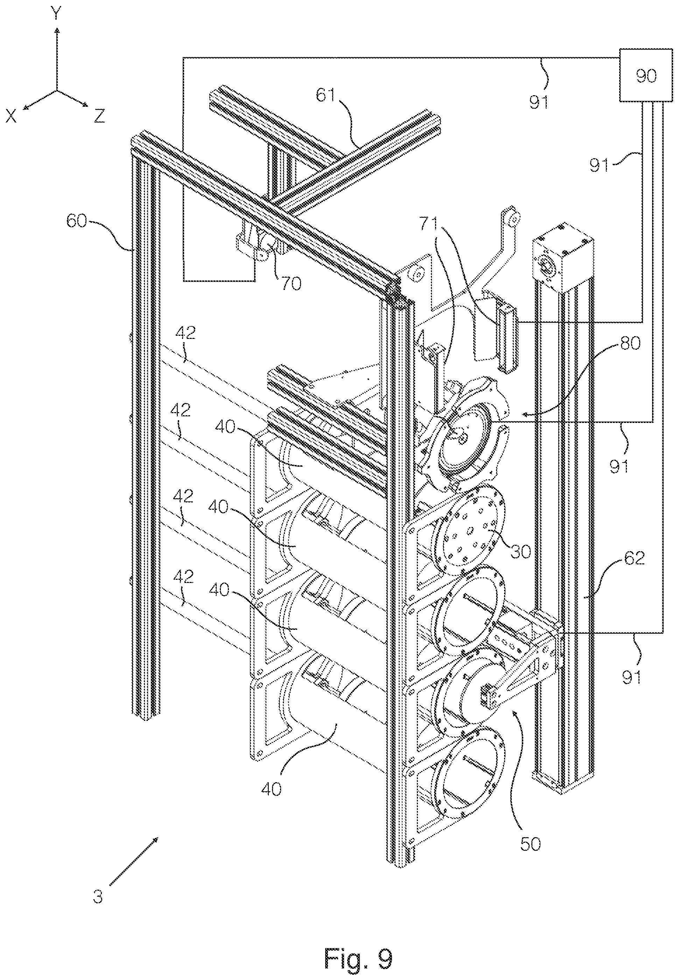

The disclosed solution comprises an abrading product detacher **2** - illustrated according to an example in Fig. **2** - and an abrading product attacher **3** - illustrated according to an example in Fig. **9****.**

Both the abrading product detacher **2** and the abrading product attacher **3** may be employed individually without one another in a device **1** for changing abrading products to enhance the efficiency of an abrading process, especially in robotized or otherwise automated abrading. Namely, the abrading product **30** detacher **2** enables efficient and non-manual detaching of abrading products **30** irrespective of their type or thickness **t.** Correspondingly, the abrading product **30** attacher **3** enables efficient and non-manual attaching of abrading products **30** of various types irrespective of their type or thickness **t.**

The abrading product detacher **2** and the abrading product attacher **3** may be employed together in a device **1** for changing abrading products to synergistically bring about even higher level of efficiency and capability to employ various types of abrading products **30** in abrading, especially in robotized or otherwise automated abrading. For example, and as will be elaborated below, employing the abrading product detacher **2** and the abrading product attacher **3** together in a device **1** for changing abrading products **30** enables fully unmanned robotized abrading in which various types of abrading products **30** are used and exchanged during abrading.

An abrading product detacher **2** according to the disclosed solution is illustrated in Fig. **2** according to an example.

The detacher **2** comprises, as main elements, a blade **14,** a table **10** and a means such as a motor **16** to adjust the mutual distance **d** between the blade **14** and the table **10.** Notably, and as is elaborated on below, such means **16** for adjusting the mutual distance **d** between the blade **14** and the table **10** are operable in the absence of the abrading product **30.**

The table **10** is receiving into contact an abrading product **30,** having a thickness t, as mounted to the gripping means **34** of an abrading tool **4.**

The blade **14** is adapted to penetrate between the abrading product **30** to be detached and that element in or attached to an abrading tool **4** having the abrading product. That is, the blade **14** is adapted to penetrate into between the abrading product **30** to be detached and the gripping means **34** of abrading tool **4,** as illustrated in Figs. **8***a* to **8***c.* It is to be appreciated here and throughout the text that the notion of "gripping means" **34** of the abrading tool **4** refers to that element on or attached to an abrading tool **4** which is capable of gripping, i.e. holding, an abrading product **30.** As a person skilled in the art understands, such gripping means **34** are to be compatible with the abrading product **30** used. For example, if an abrading product **30** has velcro-type loops on its attachment side, the gripping means are to comprise velcro-type hooks for gripping said loops. Another example, mutatis mutandis, is gripping based on pressure-sensitive adhesion, or PSA.

Moreover, as a person skilled in the art understands, the notion of "gripping means" **34** may refer to a backing pad **32** when an abrading product **30** is to be attached onto a backing pad **32** attached to an abrading tool **4,** or it may refer to an interface pad **31** when an abrading product **30** is to be attached to an interface pad **31,** which interface pad **31** may be attached to a backing pad **32** which, in turn, may be attached to an abrading tool **4.** As a person skilled in the art is well aware of such issues, all conceivable combinations are not enumerated here exhaustively.

Thus, for example, the blade **14** may penetrate between an abrasive article **30** to be detached and an interface pad **31** or a backing pad **32** to which the abrasive article **30** is attached. Examples of such a situation are illustrated in Figs. **8***a* to **8***c*. As another example, the blade **14** may penetrate between an interface pad **31** to be detached and a backing pad **32** to which the interface pad **31** is attached. An example of such a situation is illustrated in Fig. **8***d*.

Consistent with the above, if the gripping means **34** is premised on velcro-type hooks and loops, the blade **14** may penetrate into the hook and loop interface between the abrading product **30** to be detached and that element in or attached to an abrading tool **4** having the abrading product.

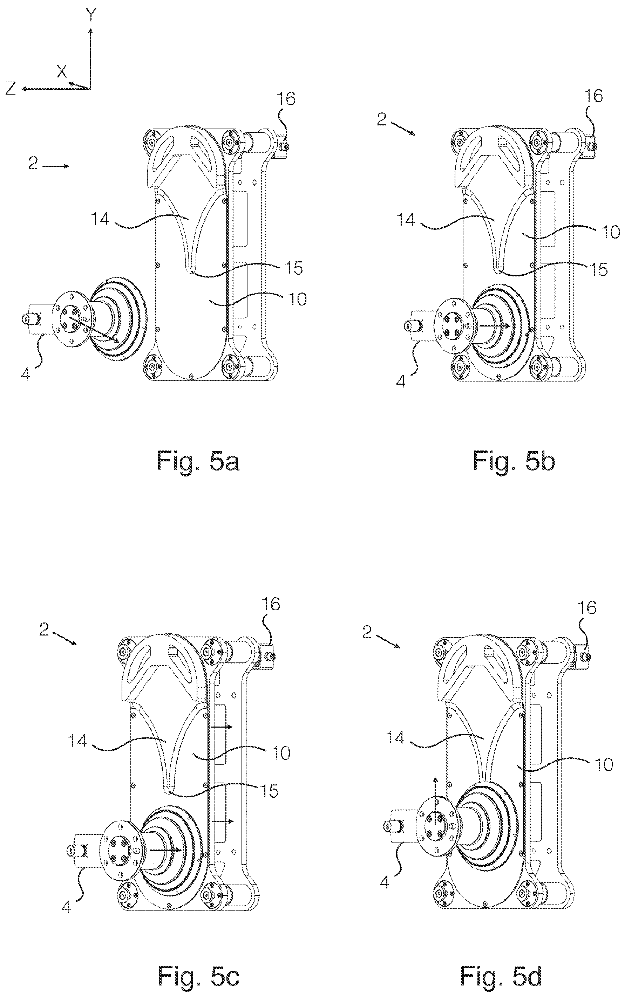

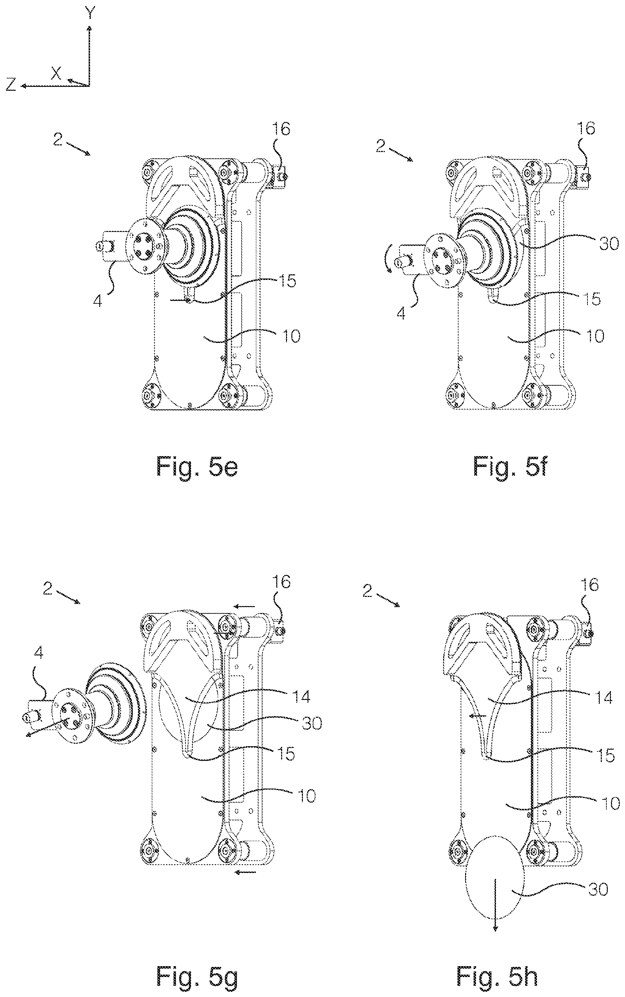

Advantageously, the blade **14** may comprise a narrow tip **15** such that the width of the tip **15** is smaller than the overall width of the blade **14,** whereby the narrow tip **15** penetrates first between the abrading product **30** to be detached and that element in or attached to an abrading tool **4** having the abrading product **30,** as illustrated according to an example in Figs. **5***c* to **5***e*. Thusly configured, the narrow tip **15** improves the penetrability of the blade **14,** thereby reducing the penetrating force required in detaching of an abrading product **30** and reducing penetration failures.

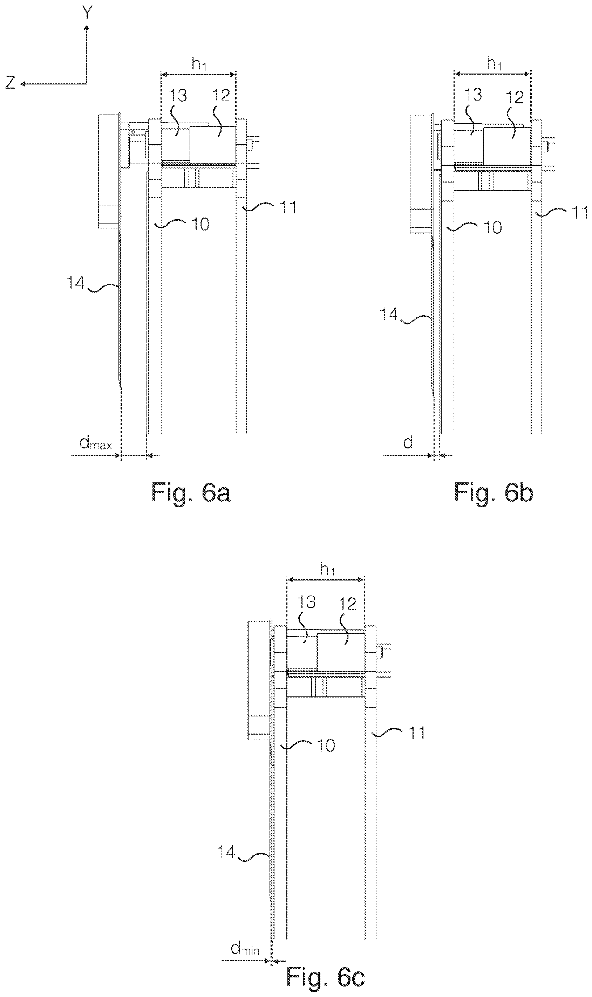

Referring to Figs. **6***a* to **6***c,* according to the disclosed solution, the distance **d** between the blade **14** and the table **10** is adjustable with suitable means such as a motor **16.** Thus, as illustrated in Figs. **6***a* to **6***c,* the distance **d** may be adjusted, preferably steplessly, between a minimum distance **dₘᵢₙ** and a maximum distance **dₘₐₓ.** Such a minimum distance **dₘᵢₙ** may be, for example, between 0 mm and 0,5 mm, such as 0,1 mm or 0,2 mm or 0,3 mm or 0,4 mm. Correspondingly, such a maximum distance **dₘₐₓ** may be, for example, between 15 mm and 35 mm, such as 20 mm or 25 mm or 30 mm.

The minimum distance **dₘᵢₙ** is consequential if the blade **14** is configured to enable a pinching effect on the detached abrading product **30** as described below.

The maximum distance **dₘₐₓ** is consequential as it is one of the main determinants of the maximum thickness **t** of the abrading product **30** detachable with the detacher **2.**

The adjustability of the distance **d** between the blade **14** and the table **10** has the beneficial technical effect of enabling the detacher **2** according to the disclosed solution to be employed to detach abrading products **30** of various different thicknesses **t,** as illustrated according to examples in Figs. **8***a* to **8***d*. Furthermore, as will be elaborated on below, the distance **d** between the blade and the table **10** may beneficially be adjusted in the absence of an abrading product **30.** Herein, it is to be appreciated that such thickness **t** of an abrading product **30** to be detached also applies to an aggregate thickness **t** of an aggregate abrading product **30** comprising two or more individual abrading products **30.** Such an example is illustrated in Fig. **8***d* wherein the aggregate abrading product **30** to be detached comprises an abrasive article **31** with a thickness **t₅** plus an interface pad **32** with a thickness t₆, whereby the thickness t₇ of the aggregate abrading product **30** is **t₅+t₆.**

Referring to Figs. **6***a* to **6***c,* advantageously the distance **d** between the blade **14** and the table **10** may adjustable in such a manner that the blade **14** remains co-planar with the table **10,** i.e. the distance **d** between the blade **14** and the table **10** remains the same or substantially the same over the entire surface area of the blade **14** regardless of the magnitude of the distance **d.** Doing so has the beneficial technical effect of keeping the penetrability of the blade **14** unaltered regardless of the thickness of the detached abrading product **30,** as the penetration angle of the blade **14** does not vary as a function of - or as otherwise affected by - the thickness of the detached abrading product **30.** Thus, doing so enables the detacher **2** to be employed with equal effectiveness and efficiency to detach abrading products **30** of greatly varying thicknesses from very thin abrasive articles **31** to very thick interface pads **32.** As examples, a very thin abrasive article **31** may be approximately 0,4 mm in thickness whereas a very thick interface pad **32** may be approximately 20 mm in thickness.

Still referring to Figs. **6***a* to **6***c,* advantageously the distance **d** between the blade **14** and the table **10** may adjustable in such a manner that adjusting the distance **d** between the blade **14** and the table **10** does not affect and/or is not affected by any other mechanical state of the detacher **2.** For example, if the detacher **2** comprises a base **11** as elaborated on below, advantageously the distance **d** between the blade **14** and the table **10** does not affect and is not affected by the distance **h** of the table **10** and the base **11.** By configuring the distance **d** between the blade **14** and the table **10** as not affecting and/or as being not affected by any other mechanical state of the detacher **2** has the beneficial effect of enabling the detacher **2** to perform additional functionalities while simultaneously maintaining the distance **d** between the blade **14** and the table **10** suitable for the thickness of the abrading product **30** to be detached or being detached.

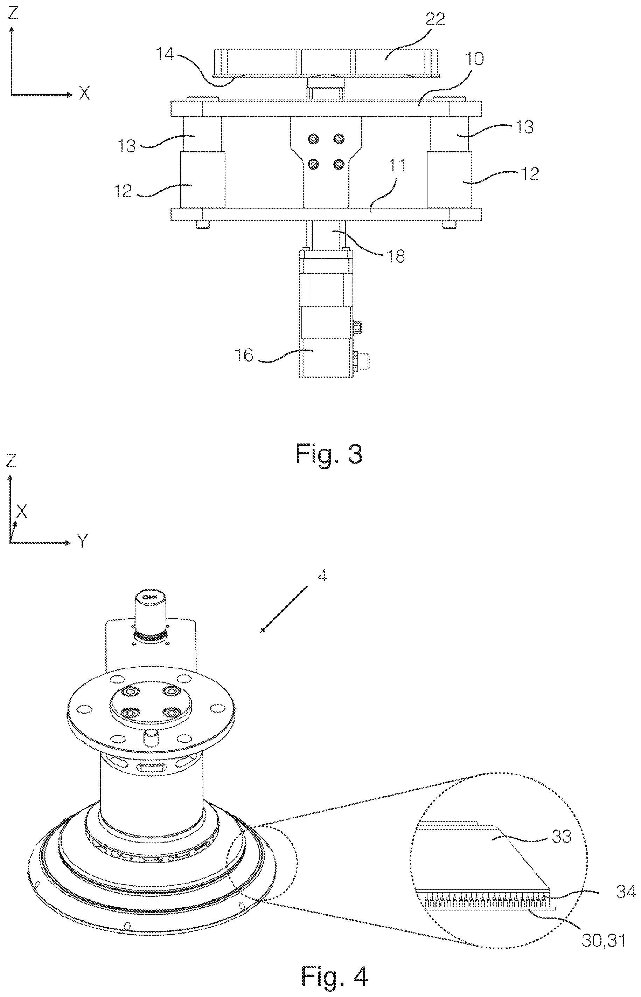

Now referring to Figs. **2** and **3****,** such adjusting of the distance **d** between the blade **14** and the table **10** may be brought about by a movement actuator such as a motor **16.** In order to adjust the **d** between the blade **14** and the table **10** to accurately be suitable for a given abrading product **30** to be detached, the movement actuator such as the motor **16** is stepless, i.e. capable of steplessly adjusting the distance **d** between the blade **14** and the table **10.**

Such a movement actuator may be connected to the blade **14** via a shaft **18.** Such a shaft **18** may be movably coupled to, for example movably housed within, and travel relative to a linear guide **19,** which linear guide **19** may be coupled with the table **10.** As is apparent for a person skilled in the art, in such an implementation, the shaft **18** and the linear guide **19** may comprise means - for example a gear and rack arrangement - by which the motor **19** or equivalent actuator may effect movement of the shaft **18** relative to the linear guide **19,** thereby effecting movement of the blade **14** relative to the table **10.** Put differently, the means to adjust the mutual distance between the table **10** and the blade **10** may comprise - the linear guide **19** connected to the table **10,** the shaft **18** connected to the blade **14** and movably coupled with the linear guide **19** and an actuator **16** such as a stepless electric motor adapted to move the shaft **18** relative to the linear guide **19.**

Referring to Fig. **2****,** in the case the movement actuator takes the form of a motor **16,** preferably a stepless motor **16,** the motor **16** may comprise a power supply socket **21** for supply of electricity. In addition, such a motor **16** may comprise a communications interface **20** via which the motor **16** may be connected via a communication pathway **91** to an instructions-giving device **90** such as a programmable logic or equivalent, whereby the motor **16** may be instructed to adjust the distance **d** between the blade **14** and the table **10** for each upcoming abrading product **30** to be detached. With such a connection **91** to an instructions-giving device **90,** the detacher **2** may advantageously adjust the distance **d** between the blade **14** and the table **10** already in anticipation, i.e. in the absence, of an abrading product **30** to be detached, while that abrading product **30** is, for example, still being used in an abrading process. Moreover, with such a connection **91** to an instructions-giving device **90,** the detacher **2** may advantageously adjust the distance **d** between the blade **14** and the table **10** in anticipation of a next abrading product **30** to be detached in a sequence of anticipated abrading products **30** to be detached, which sequence may comprise abrading products **30** used by one or more abrading tools **4,** such as a group of several industrial robots **5** each equipped with an abrading tool **4.**

Now referring to Fig. **2****,** the detacher **2** may comprise a base **11.** The base **11** may be connected to the table **10** by means of one or more column arrangements **12,13.** For example, base **11** may be connected to the table **10** by means of one column arrangement **12,13** in each corner of the table **10,** such that there is one column arrangement **12,13** in each one of the four corners of the table **10** as illustrated in the example depicted in Fig. 2.

The base **11** may be immovably attached in an immovable support structure in order to provide the detacher **2** with a rigid means of mounting. For example, the base **11** may be immovably attached to a frame **60,** as illustrated in Fig. **1***a**,* which frame **60** may be shared with other components of the device **1** for changing abrading products **30,** such as with the attacher **3.**

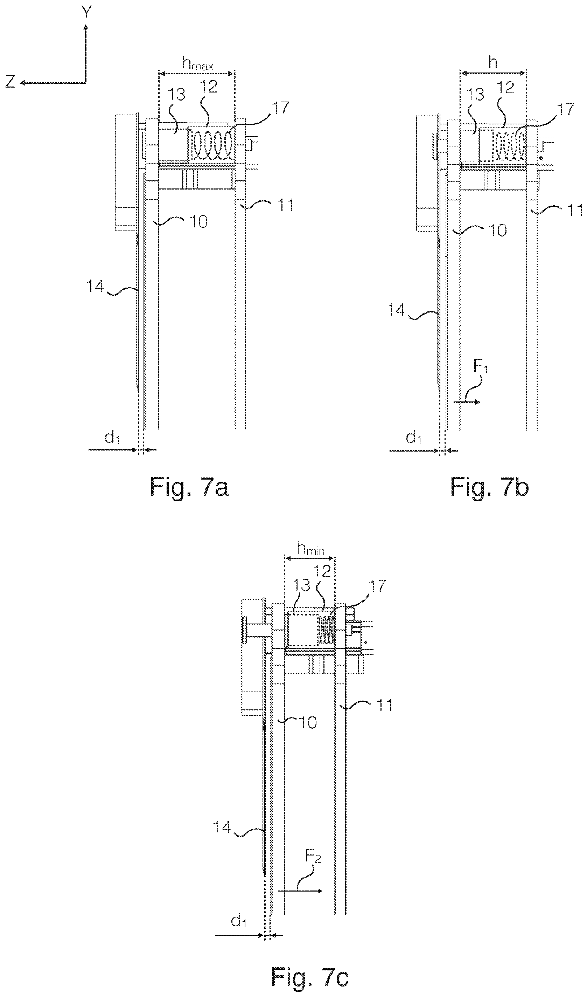

Now referring to Fig. **2** together with Figs. **7***a* to **7***c*, the base **11** may be connected to the table **10** by means of one or more column arrangements **12,13** floatably, i.e. in such a manner that the table **10** may move towards and away from the base **11,** i.e. along the **Z** axis in Fig. **2****.** Put otherwise, the base **11** may be connected to the table **10** by means of one or more column arrangements **12,13** adapted to enable varying distance **h** between the base **11** and the table **12.** Such a configuration has the beneficial technical effect to permitting variability in the positioning of the abrading tool **4** having the abrading product **30** to be detached when coming into contact with the table **10** upon embarking on detaching the abrading product **30.** Thus, by configuring the base **11** to be connected to the table **10** by means of column arrangements **12,13** adapted to enable varying distance **h** between the base **11** and the table **12** increases the robustness of the detacher **2** in not requiring very finely positioned abrading product **30** in relation to the table **10.** Doing so enables, for example, an abrading robot **5** equipped with the abrading tool **4** having the abrading product **30** to move with a fast and relatively inaccurate movement to bring the abrading product **30** into contact with the table **10** without having to slow down in order to have the abrading product **30** highly accurately positioned with respect to the table **10.**

To enable such robustness as just described, the base **11** may be connected to the table **10** by means of column arrangements **12,13** each comprising an inner column **13** which may move inside and in relation to a hollow outer column **12,** as illustrated in Fig. **2** and Figs. **7***a* to **7***c*. Put differently, with such an arrangement, the inner column **13** may be movably coupled with the outer column **12** and be capable of penetrating to inside the outer column **12.** Furthermore, such an arrangement may advantageously be furnished with a spring **17** inside each outer column **12** resisting the penetrating movement of the respective inner column **13** to inside the outer column **12.** Thusly furnished, the spring **17** compresses when force **F** is applied against the table **10** - as a notable example, by an abrading tool **4** having an abrading product **30** to be detached - whereby the table **10** moves closer to the base **11,** whereby the inner column **13** moves further inside the outer column **12** consequently compressing the spring **17.** Put differently, the spring(s) **17** may absorb an impact exerted by the abrading product **30** onto the table **10.** Correspondingly, when the above-mentioned force **F** is released, the table **10** returns to its original position with respect to - such as to its maximum distance **hₘₐₓ** from - the base **11** as pushed by the spring **17** in each of the column arrangement **12,13.**

Such a spring-based implementation for the column arrangements **12,13** has the beneficial technical effect to permitting variability in the positioning of the abrading tool **4** having the abrading product **30** to be detached when coming into contact with the table **10** upon embarking on detaching the abrading product **30,** as the spring(s) **17** may absorb any impact exerted by the abrading tool **4** onto the table **10.** Thus, by configuring the base **11** to be connected to the table **10** by means of spring-comprising column arrangements **12,13** adapted to enable varying distance **h** between the base **11** and the table **12** increases the robustness of the detacher **2** in not requiring very finely positioned abrading product **30** in relation to the table **10** as the spring(s) **17** may absorb an impact exerted by the abrading tool **4** onto the table **10.** By doing so enables, for example, an abrading robot equipped with the abrading tool **4** having the abrading product **30** to move with a fast and relatively inaccurate movement to bring the abrading product **30** into contact with the table **10** without having to slow down in order to avoid a potentially damaging impact onto the table **10.**

The column arrangement **12,13** comprising one or more sets of inner columns **12** and outer columns **13** as described above has the beneficial technical effect of guiding the movement of the table **10** in relation to the base **11** so that the table **10** does not tilt in relation to the base **11.** Thereby, the orientation angle of the blade **14** remains constant or substantially constant while the blade **14** may move together with the table **10** in relation to the base **11.** Put otherwise, thereby the base **11** remains co-planar with the table **10** regardless of their mutual distance **h.**

Consistently with what was described already earlier, advantageously any alterations in the distance **h** between the table **10** and the base **11** have no effect on the distance **d** between the blade **14** and the table **10.**

Figures **5***a* to **5***b* illustrate, according to an example, stepwise progression of detaching an abrading product **30** with the detacher **2.** Such progression also constitutes a method for detaching an abrading product **30** according to the disclosed solution.

With reference to Fig. **5***a**,* an abrading tool **4** - which may be attached to an abrading robot **5** or an equivalent device - first approaches the detacher **2.** Such approaching may be performed with a rapid and relatively inaccurate movement of the abrading tool **4.**

With reference to Fig. **5***b**,* the abrading tool **4** next moves into contact with the table **10** of the detacher **2.** In this context, it is to be understood that while for straightforwardness of description it is said that the abrading tool **4** comes into contact with the table **10,** precisely speaking it is the abrading product **30** attached lowermost to the abrading tool **4** that comes into contact with the table **10,** as a person skilled in the art readily understands. Such coming into contact may be performed with a rapid and relatively inaccurate movement of the abrading tool **4** in case the table **10** is in a spring-mediated contact with the base **10,** as described earlier, in which case the table **10** may absorb a reasonable impact by the abrading tool **4** onto the table **10,** as illustrated in Fig. **5***c* with the movement of the table **10** towards the base **11.** As a person skilled in the art understands, after having come into contact with the table **10,** the abrading product **30** to be detached is to reside on the table **10** at least substantially co-planarly with the table **10.**

With reference to Fig. **5***d*, the abrading tool **4** next moves, while being in contact with the table **10,** towards the blade **14,** whereby eventually the blade **14** starts to penetrate into the gripping interface between the abrading product **30** to be detached and that element attached to the abrading tool **4** to which the abrading product **30** to be detached is attached. In case the blade **14** comprises a narrow tip **15** or several such tips **15,** such tip(s) **15** penetrates first, followed by an increasing cross-section of the blade **14.**

With reference to Fig. **5***e**,* the abrading tool **4** continues motion on the same or substantially same trajectory, preferably until some portion of the blade **14,** such as the tip(s) **15** of the blade **14** re-emerges from between the abrading product **30** to be detached and that element attached to the abrading tool **4** to which the abrading product **30** to be detached is attached. In other words, and for reasons described below, it is not necessary that the penetrating travel of the blade **14** would result in complete separation of the abrading product **30** to be detached from that element attached to the abrading tool **4** to which the abrading product **30** to be detached is/was attached. Nor is it necessary that the blade **14** would, at any one time, fully occupy the space between the abrading product **30** (to be) detached and that element attached to the abrading tool **4** to which the abrading product **30** to be detached is/was attached.

With reference to Figs. **5***e* and **5***g*, the abrading tool **4** next makes a retracting movement whereby the abrading product **30** becomes detached from that element attached to the abrading tool **4** to which the abrading product **30** to be detached was attached. Advantageously, to facilitate such detachment, the retracting movement of the abrading tool **4** may be divided into two sub-movements such as a first tilting movement illustrated in Fig. **5***f* and a subsequent withdrawing movement as illustrated in Fig. **5***g*. Such sub-movements have the beneficial technical effect of reducing the required detachment force because the abrading product **30** is gradually detached from that element attached to the abrading tool **4** to which the abrading product **30** to be detached is attached.

The ejection of the detached abrading product **30** from the detacher **2** is facilitated if the detacher **2** is installed in a vertical or nearly vertical orientation such that the table **10** is vertically or nearly vertically oriented. Thereby, the abrading product **30** may be ejected from the detacher **2** as pulled by the gravity, i.e. without any need for additional ejection apparatus(es) and/or manual labor.

The ejection of the detached abrading product **30** may be made more controlled by having the blade **14** pinch the abrading product **30** to be detached. This may be brought about, for example, by moving the blade **14** closer to the table **10** upon, or shortly after, a portion of the blade **14** re-emerging from between the abrading product **30** to be detached and that element attached to the abrading tool **4** to which the abrading product **30** to be detached is attached. By thusly moving the blade **14** closer to the table **10** causes the blade **14** to press the abrading product **30** against the table **10,** thereby pinching the abrading product **30** in place. Afterwards, when the abrading tool **4** has withdrawn from contact with the table **10,** such pinching may be released, as illustrated in Fig. **5***b*, by increasing the distance **d** between the blade **14** and the table **10,** whereby the abrading product may be controllably released for ejection at a desired point of time.

Such pinching of the abrading product **30** by the blade **14** has the additional benefit of holding the abrading product **30** in place during the retracting movement of the abrading tool **4** whereby the abrading product **30** may be prevented from slipping in case the detachment of the abrading product **40** occurs asymmetrically.

After the abrading product **30** has been expelled from the detacher **2,** controllably by pinching functionality or otherwise, the abrading product **30** may be collected in a receptacle or conveyed elsewhere, for example with a conveyer belt. Thus, in case the detacher **2** is mounted vertically, like is illustrated in Fig. **1***a**,* the detached abrading products **30** do not accumulate inside or within the detacher **2,** whereby the operation of the detacher **2** beneficially need not be periodically interrupted in order to empty the detacher **2** from accumulated detached abrading products **30.**

The detacher **2** may additionally comprise a bumper **22** as illustrated in Fig. **2****.** Such a bumper **22** is mounted to that end of the blade **14** which is opposite to the first-penetrating part of the blade **14** such as the tip **15.** The bumper **22** serves as an ultimate stopper in the penetrating movement of the abrading tool **4** in accordance with the above when that element of the abrading tool **4** having the abrading product **30** is pressed against the bumper **22.**

Advantageously, the bumper **22** comprises a V-shaped section, as illustrated in Fig. **2****,** whereby the element of the abrading tool **4** having the abrading product **30** is forced - as the V-shape closes in - into a specific position along the **X** axis as it is pressed against the bumper **22.** In the case of random orbital abrading tools **4** - in which the internal axis of rotation of the abrading tool **4** is offset from the center of the element of the abrading tool **4** having the abrading product **30** such as a backing pad **33** - the internal axis of rotation of the abrading tool **4** may be forced to rotate into a known position. For example, by pressing the element of the abrading tool **4** having the abrading product **30** against the V-shaped section of the bumper **22** may force the internal axis of the abrading tool **4** to rotate into such a position that the axially offset mounting point of the element of the abrading tool **4** having the abrading product **30** is at a maximum distance from the bumper **22.** This has the beneficial technical effect of enabling aligning the internal axis of the abrading tool **4** and thereby the axially offset mounting point of the element of the abrading tool **4** having the abrading product **30** into a known locus in the **X-Y** plane - for example in view of subsequently attaching an abrading product **30** automatically such as with an attacher **3** as described below - even without machine vision capabilities or other such more complicated arrangements. For example, such alignment may be sufficient for precise subsequent attaching of a non-perforated abrading product **30** such as an abrading net-based abrasive article **31** where the rotational position of the element of the abrading tool **4** receiving the abrading product **30** is inconsequential.

An attacher **3** according to the disclosed solution is illustrated according to an example in Fig. **9****.**

The attacher **3** comprises as main elements, one or more magazines **40,** a movable gripping device **50** and a loading device **80.** Such main elements as well as any additional elements may be mounted on a frame **60,** though the movable gripping device **50** may be mounted on a separate support structure more amenable for providing the required movement - as elaborated on below - such as a linear guide **62.**

Of the main elements, the one or magazines **40** are adapted to receive and store a plurality of abrading products **30.** Correspondingly, the loading device **80** is adapted to receive and hold an abrading product **30** for attachment to an abrading tool **4.** Furthermore, the gripping device **50** comprises gripping means **52** and is adapted to grip an abrading product **30** at the one or more magazines **40,** move from said one or more magazines **40** to the loading device **80** and deposit the abrading product **30** at the loading device **80.**

As additional possibilities, the attacher **3** may comprise means for providing machine vision capabilities such as a camera **70.** To enhance machine vision capabilities, the camera **70** may be accompanied with one or more flashes **71** for improved illumination.

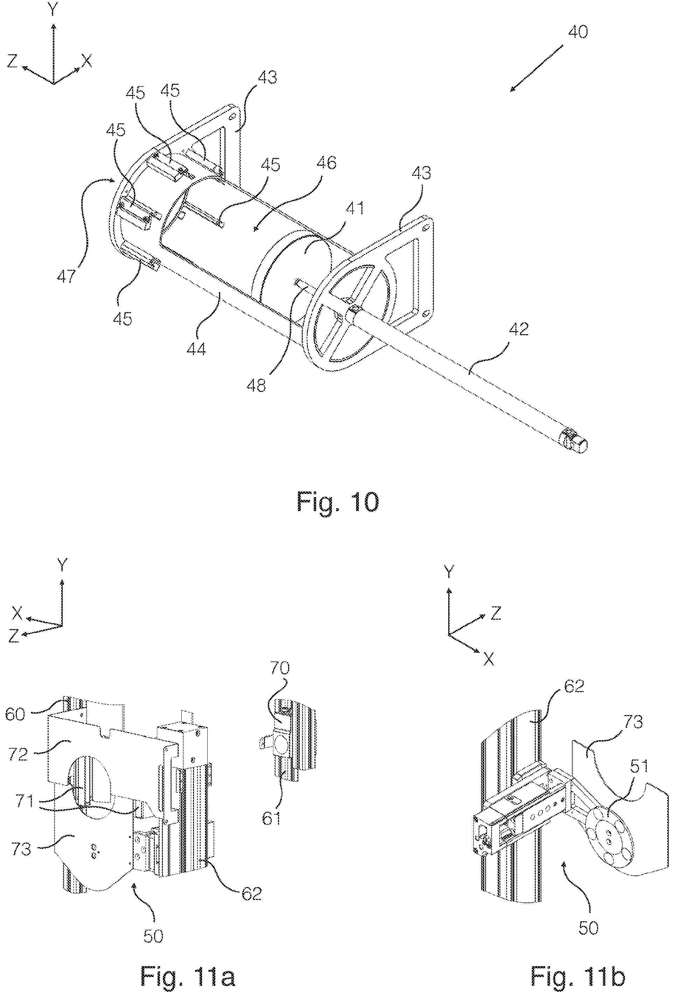

The magazine **40,** of which there may be one or more in the attacher **3,** is illustrated according to an example in Fig. **10****.** The magazine **40** is adapted to receive and thereafter house a plurality of abrading products **30** to be attached, such as a plurality of abrasive articles **31** and/or a plurality of interface pads **32.** For straightforwardness of operation, it may be advantageous to stock one magazine **40** with one type of abrading products **30.**

In principle, there is no upper limit to the number of magazines **40** in the attacher **3** according to the disclosed solution. Rather, the practical upper limit to the number magazines **40** derives from the desired physical dimensions of the attacher **3** and/or the setup times and speed of operation.

Still referring to Fig. **10****,** the magazine **40** comprises as main elements a housing **44,** a plunger **41** and supports **43** for mounting the magazine to a support structure such as the frame **60.** The housing **44** of the magazine **40** is elongated in order to allow a plurality of abrading products **30** to be housed within the housing.

Advantageously, the housing **44** has an internal cross-sectional shape and area which matches of substantially matches the cross-sectional shape and area of the abrading products **30** to be housed within the housing. For example, and as illustrated in the example depicted in Fig. **10****,** in the case of circular abrading products **30** such as abrasive discs **31,** the housing **44** is cylindrical. Thus, an attacher **3** may comprise magazines **40** with mutually different internal cross-sectional sizes and/or shapes to accommodate abrading products **30** with mutually different cross-sectional sizes and/or shapes. For circular abrading products **30,** for example, an attacher **30** may comprise magazines **40** with approximately 25.4 mm, 76.2 mm, 127 mm, 152.4 mm and/or 228.6 mm (approximately 1-inch, 3-inch, 5-inch, 6-inch and/or 9-inch) circular internal cross-sectional areas. The same dimensioning principles apply to a loading device **80** of the attacher **3 -** as described further below - especially with respect to the plunger **82** and the collar elements **81** of the loading device **80.**

Furthermore, the housing **44** comprises a supply opening **46** configured to allow abrading products **30** to be inserted, i.e. supplied, into the housing **44.** Preferably, the supply opening **46** is dimensioned large enough to allow abrading products **30** to be installed in stacks of plurality of abrading products **30,** such as in stacks of 5, 10, 50 or 100 abrading products **30.**

Correspondingly, the housing **44** comprises a dispensing opening **47** configured to allow abrading products **30** to be attached to travel through, being thereby dispensed from the magazine **40.** Preferably, the dispensing opening **47** is at that side of the magazine **40** which faces - as is elaborated below and illustrated in Fig. **9** - a gripping device **50** when the gripping device **50** is at the magazine **40.**

Referring to Fig. **10****,** the magazine **40** comprises a plunger **41.** The plunger **41** is movably mounted in the housing **44,** at that end of the housing **44** which is opposite to the dispensing opening **47.** The plunger **41** is connected to and moved by a shaft **48** or an equivalent means of providing the plunger **41** with movement. The plunger **41** is thereby configured to provide the abrading product(s) **30** housed within the housing with pushing force towards the dispensing opening **47.** In case the plunger **41** is provided with movement with a shaft **48,** the shaft **48** may actuated with a linear actuator **42** such as a pneumatic cylinder.

Still referring to Fig. **10****,** the magazine **40** advantageously comprises one or more movement-resisting elements **45** adapted to resist the movement of the abrading product(s) **30** housed within the magazine **40.** Such movement-resisting element(s) **45** may be mounted on the inside wall, i.e. on the inner surface, of the housing **44** at and/or near the dispensing opening **47** in order to prevent inadvertent exit of the abrading product(s) **30** through the dispensing opening **47** as one of its/their function. That is, the movement-resisting elements **45** are adapted for resisting the movement of the abrading product(s) **30** in the magazine **40** relative to the dispensing opening **47.**

For example, and as illustrated in the example depicted in Fig. **10****,** such movement-resisting element(s) **45** may take the form of bristle unit(s). Such bristle unit(s), as movement-resisting element(s) **45,** comprise set of bristles directed towards the inside of housing **44.** For example, there may be four, six or eight bristle units mounted on the housing **44** such that their bristles are directed towards the inside of the housing **44.** Such bristle units, as movement-resisting elements **45,** may be elongated and extend along the length of the housing **44** from the dispensing opening **47** towards the plunger **41,** for example to a distance of 1 cm, 5 cm or 10 cm from the dispensing opening **47.**

Such movement-resisting elements **45** housed within the magazine **40,** such as the bristle units, have the beneficial technical effect of preventing the inadvertent exit of abrading product(s) **30** from the magazine **40.** Thus, regardless of the mounting direction of the magazine **40,** the abrading product(s) **30** may be prevented from exiting the magazine **40** before specifically picked up as elaborated on below. Thus, it is not necessary to mount the magazine **40** vertically with the dispensing opening **47** directing upwards in order to have the abrading product(s) controllably dispensed, but the magazine **40** may be mounted, for example, horizontally - i.e. along the **Z** axis - as illustrated in Fig. **9** according to an example.

Such movement-resisting elements **45,** when implemented as bristle units, have the additional beneficial technical effect of separating the abrading products **30** dispensed from the magazine **40** as elaborated on below. Therefore, the magazine **40** enables controlled individual dispensing of abrading products **30** to be attached, even in the case of abrading products **30** which typically become attached to each other when stacked, such as abrasive net discs. Thus, it is not necessary to separate such abrading products **30** which easily become attached to each other with papers, foils, aluminum sheets or equivalent, but rather such abrading products **30** may be stacked into the magazine **40** as-is for controlled individual dispensing.

It is conceivable that the above-described functionality of separating the abrading products **30** from each other may be implemented also otherwise, for example as a functionality separate from the movement-resisting elements **45.** For example, such a functionality of separating the abrading products may be implemented by injecting pressurized air in between the abrading products **30** to be separated from each other.

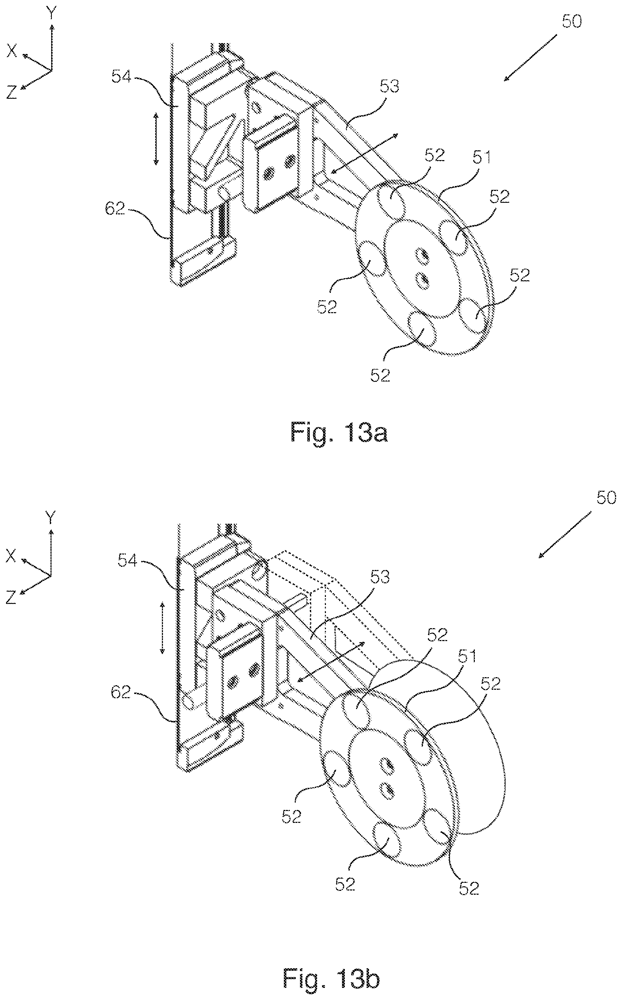

Now referring to Figs. **13***a* and **13***b,* the gripping device **50** of the attacher **3** is adapted to transport abrading products **30** within the attacher **3.** As a notable example, the attacher **3** is adapted to transport abrading products **30** from the one or more magazines **40** to a loading device **80** as elaborated on below. As another example, if the attacher **3** is equipped with means for providing capabilities for machine vision, the gripping device **50** is adapted to transport abrading products **30** to and from those means as well.

Now referring to Fig. **9****,** the gripping device **50** is coupled with a structure which provides the gripping device **50** with means to travel between the main elements of the attacher **3,** at least between the one or more magazines **40** and the loading device **80.** Towards that end, and as is illustrated in the example depicted in Fig. **9****,** the attacher **3** may comprise a linear guide **62** with which the gripping device **50** may be coupled and along which the gripping device **50** may travel. In such a case, the one or more magazines **40** and the loading device **80** are to be installed - for example stacked in a vertical row co-linear with the linear guide **62** - in such a manner that the gripping device **50** can reach the one or more magazines **40** and the loading device **80** while travelling along the linear guide **62** as elaborated on below.

Now referring to Figs. **13***a* and **13***b,* if coupled with a linear guide **62,** and as a person skilled in the art readily understands, the gripping device **50** is to be provided with a first motion actuator **54** which can interact with the linear guide **62** so as to provide the gripping device **50** movement along the linear guide **62.** For example, such interaction may be premised on a gear and rack arrangement driven by an actuator such as an electric or pneumatic motor. Thus, the first motion actuator **54** may be movably coupled with a linear guide **62** for effecting movement of the gripping device **50** at least between the one or more magazines **40** and the loading device **80.**

As an alternative to employing a linear guide **62,** it is conceivable that the gripper **50** may be mounted on a robot (not illustrated) or an equivalent arm arrangement (not illustrated). In such a case, the one or more magazines **40** and the loading device **80** and any other element of the attacher **3** with which the gripper **50** may interact, such as means for machine vision capabilities, may be situated with more freedom as long as they reside within the operating range of the robot or an equivalent arm arrangement.

In order to transport abrading products **30** within the attacher **3,** the gripping device **50** comprises means for gripping abrading products **30.** As a person skilled in the art readily understands, such means of gripping are to be compatible with the corresponding gripping surfaces of the abrading products **30** to be gripped. For example, if the abrading products **30** to be gripped comprise hook-and-loop - or, velcro - type of gripping surfaces, the means of gripping of the gripping device **50** are also to be premised on hook-and-loop - or, velcro - type of gripping surfaces.

It is conceivable that instead of - or even as an addition to - hook-and-loop type of gripping means in the gripping device **50,** such gripping means may be premised on needles - i.e. needles piercing through the abrading product **30** thereby gripping it via needles - or premised on vacuum - i.e. suction pressure being subjected onto a non-perforated surface of the abrading product **30.** Such needle- and vacuum-premised solutions could offer the benefit of less prone to wear in use.

Referring to Figs. **13***a* and **13***b,* for the purposes of gripping abrading products **30,** the gripping device **50** may be provided with a gripping plate **51** comprising the above-mentioned means of gripping such as one or more gripping elements **52.** Advantageously, such a gripping plate **51** is substantially of the same shape as the abrading products **30** to be gripped. For example, if the abrading products **30** to be gripped are circular, the gripping plate **51** may be correspondingly circular. For the reasons of interaction with the loading device **80** described further below, the gripping plate **51** is to be smaller in surface area than the abrading products **30** to be gripped.

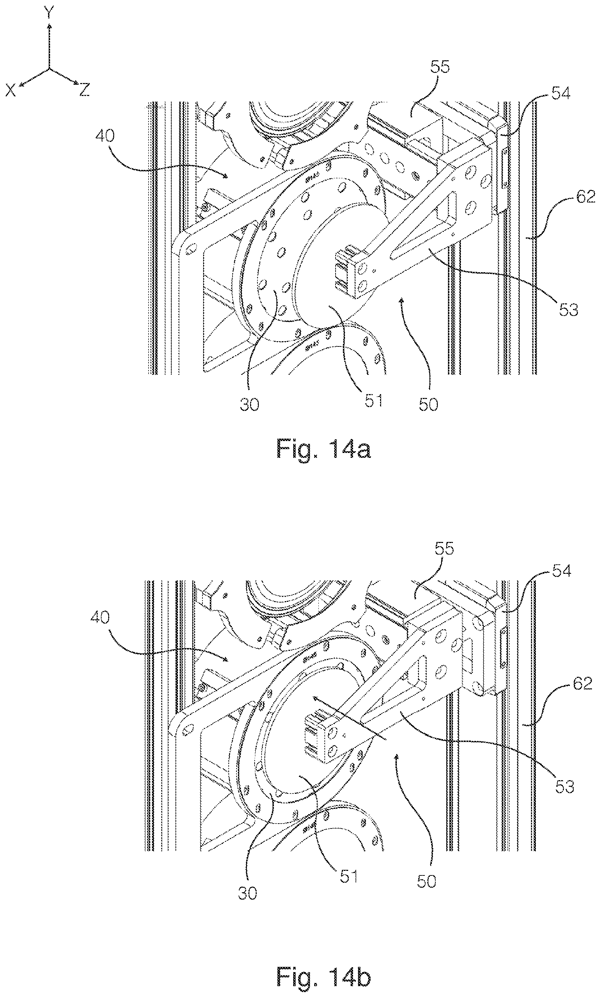

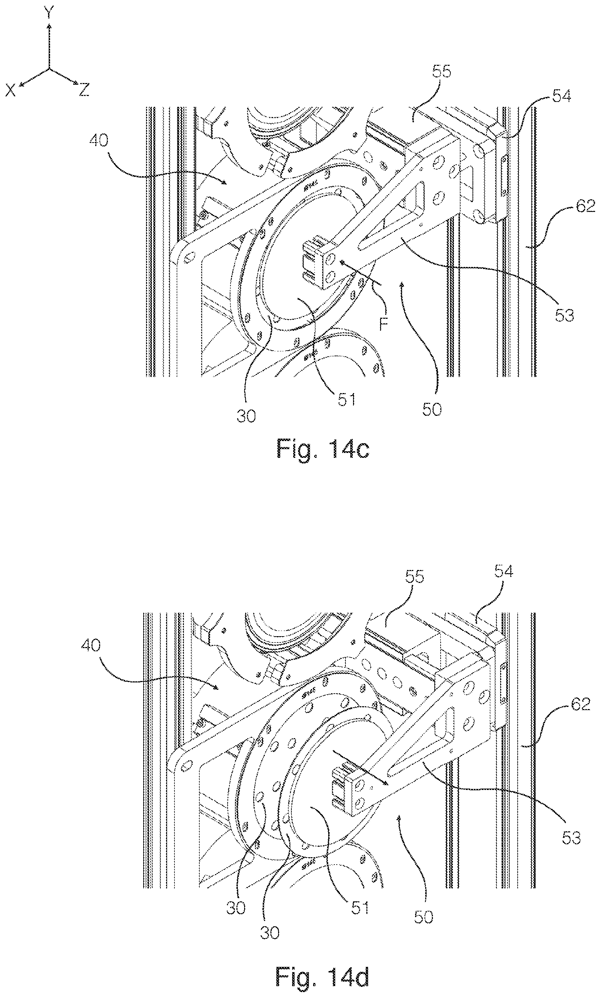

Referring to Figs. **13***a* and 13***b,*** if the gripping device **50** is coupled with a linear guide **62,** the gripping plate **51** is also configured to be capable of travelling towards and away from the elements of the attacher **3** with which the gripping device **50** interacts, such as the one or more magazines **40** and the loading device **80.** In the example illustrated in Fig. **9****,** such travel is horizontal whereas the travel along the linear guide **62** is vertical. For providing the gripping plate **51** with a capability to travel towards and away from the elements of the attacher **3,** the gripping device **50** comprises a second motion actuator **55** shown according to an example in Figs. **14***a* **to 14***d* and **15***a* **to 15***d***.** As a person skilled in the art readily understands, such a second motion actuator **55** may be premised on a gear and rack arrangement driven by an actuator such as an electric or pneumatic motor. Thus, second motion actuator **55** may be adapted to move the gripping means **52,** such as the one or more gripping elements **52,** towards and away from at least the one or more magazines **40** and the loading device **80.**

In order to provide desired distance between the second motion actuator **55** and the abrading plate **51,** the abrading plate **51** may be connected to the second motion actuator **55** via an arm **53,** as illustrated according to an example in Figs. **13***a* and **13***b**.***

With reference to Figs. ***14a* to 14***d***,** the gripping device **50** may interact with the magazine **40** as follows. The following principles also apply in the case of each of the magazines **40** in an attacher **3** comprising more than one magazine **40.**

With reference to Fig. **14***a**,* the gripping device **50** moves, for example along the linear guide **62,** to a position at the magazine **40** housing one or more abrading products **30.**

Next, with reference to Fig. **14***b*, the gripping device **50** moves, as effected by the second motion actuator **55,** the gripping plate **51** into contact with the foremost abrading product **30** in the magazine **40.** As is obvious, the abrading product(s) **30** in the magazine are to be housed so as to have their gripping surfaces towards the dispensing opening **47** so as to expose their gripping surfaces towards the abrading plate **51** upon becoming the foremost at the dispensing opening **47.** Upon coming into contact with the foremost abrading product **30,** the gripping elements **52** of the gripping plate grip onto the gripping surface of the foremost abrading product **30.**

Next, with reference to Fig. **14***c***,** after having come into contact with the foremost abrading product **30,** the gripping plate **51** exerts force **F,** as effected by the second motion actuator **55** onto the foremost abrading product **30.** Consequently, the grip between the foremost abrading product **30** and the gripping elements **52** becomes firmer. In addition, the plunger **41** of the magazine **40** gets, with the one or more abrading products **30** between the plunger **41** and the gripping plate **51** pushed back, i.e. away from the dispensing opening **47.** If the magazine **40** is equipped with bristle unit(s) as movement-resisting elements **45,** the bristles of the bristle unit(s) become consequently bent backwards towards the plunger **41.**

Herein, the becoming of firmer of the grip between the foremost abrading product **30** and the gripping elements **52** may be further may be further improved by configuring the plunger to exert a lesser force **F** against the force **F** exerted by the gripping plate 51 and/or maintaining the force **F** exerted by the gripping plate **51** for while such as for 1, 2, 3, 4 or 5 seconds.

Next, with reference to Fig. **14***d*, the gripping device **50** retracts, as effected by the second motion actuator **55,** the gripping plate **51** away from the magazine **40** with the abrading product **30** gripped onto the gripping plate **51.** During such retraction, the bristles of the bristle unit(s) as movement-resisting elements **45** straighten, i.e. orient towards the respective center of the housing **44** of the magazine **40.** Thereby, the bristles penetrate into between the abrading products **30** in the magazine **40** - in case the magazine **40** contains more abrading products **30** than the one gripped onto the gripping plate **51.** Thus, when the gripping plate **51** pulls the gripped abrading product **30** out from the dispensing opening **47,** the rest of the abrading products **30** are withheld within the magazine **40** by the bristles of the bristle unit(s) as movement-resisting elements **45.** Thereby, the bristle unit(s) as movement-resisting elements **45** provide the beneficial technical effect of separating the abrading products **30** from each other, thereby preventing more than one abrading products **30** from being pulled at once from the magazine **40.**

Upon completion of the steps just described, the gripping device **50** has picked up an abrading product **30** for delivery to elsewhere in the attacher **3,** such as to the loading device **80** or to a machine vision-providing arrangement.

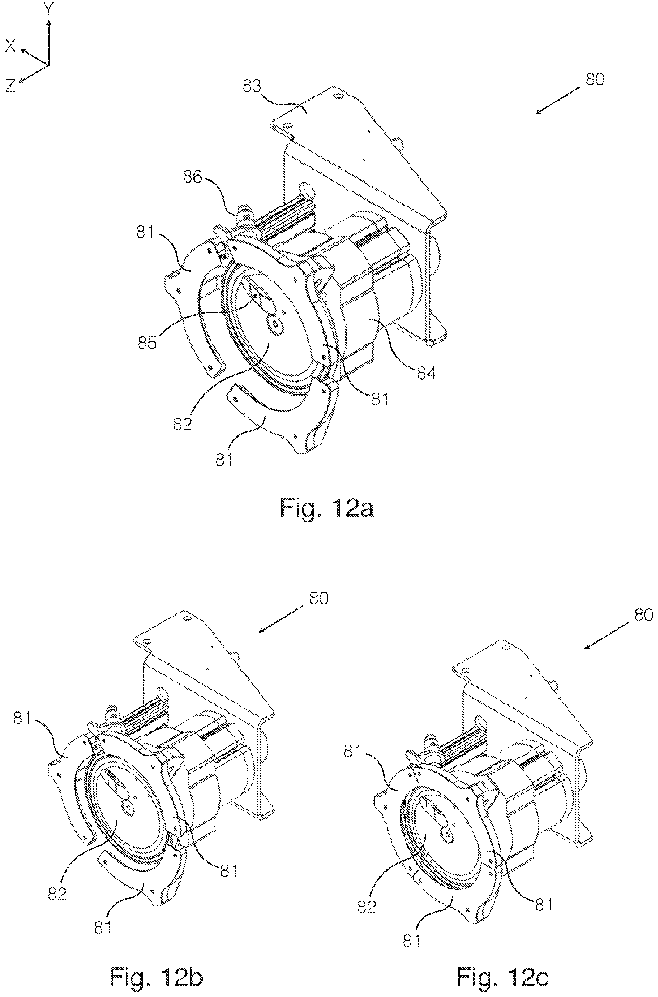

The loading device **80** according to the disclosed solution is illustrated according to an example in Figs. **12***a* to **12***c*.

The loading device **80** comprises as main elements a plurality of collar elements **81,** a plunger **82** and a support **83** by means of which the loading device **80** may be rigidly mounted, for example to a frame **60.** The loading device **80** additionally comprises a housing **84** via which the plunger **82** and the one or more collar elements **81** may be connected to the support **83,** though it is conceivable that the housing **84** and the support **83** may take the form of a unitary object.

The collar elements **81** are configured to move radially outwards to an "open" position as depicted **12***a* and **12***b* as well as radially inwards to a "closed" position as depicted in Fig. **12***c*. Therefore, the collar elements **81** can allow an abrading product **30** to travel past the collar elements **81** when in the "open" position as well as prevent an abrading product **30** from travelling past the collar elements **81** when in the "closed" position. To achieve this functionality, the collar elements **81** are to be dimensioned such that in the "closed" position they define an inner opening with a circumference smaller than the circumference of an abrading product **30** being processed, and in the "open" position they define an inner opening with a circumference greater than the circumference of an abrading product **30** being processed.

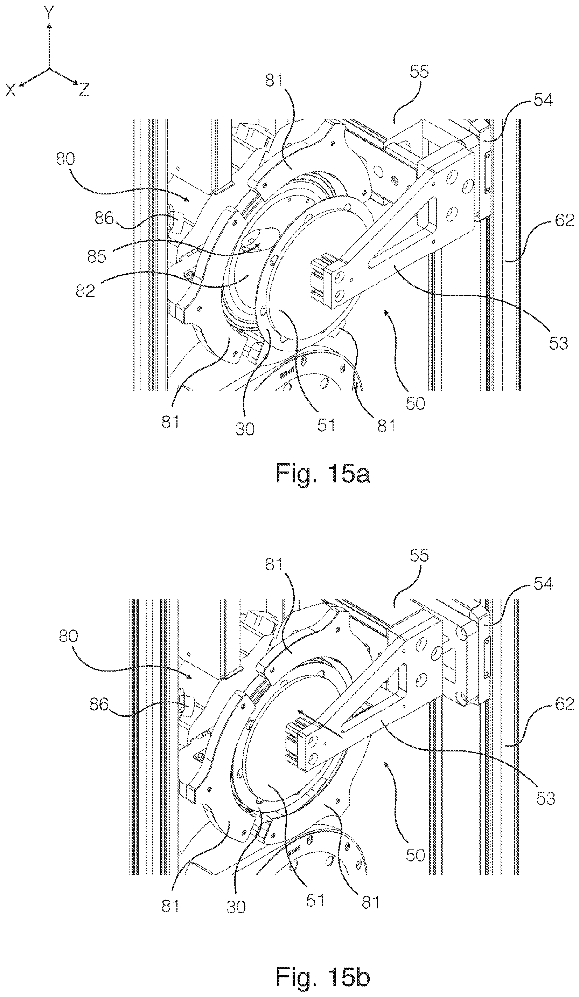

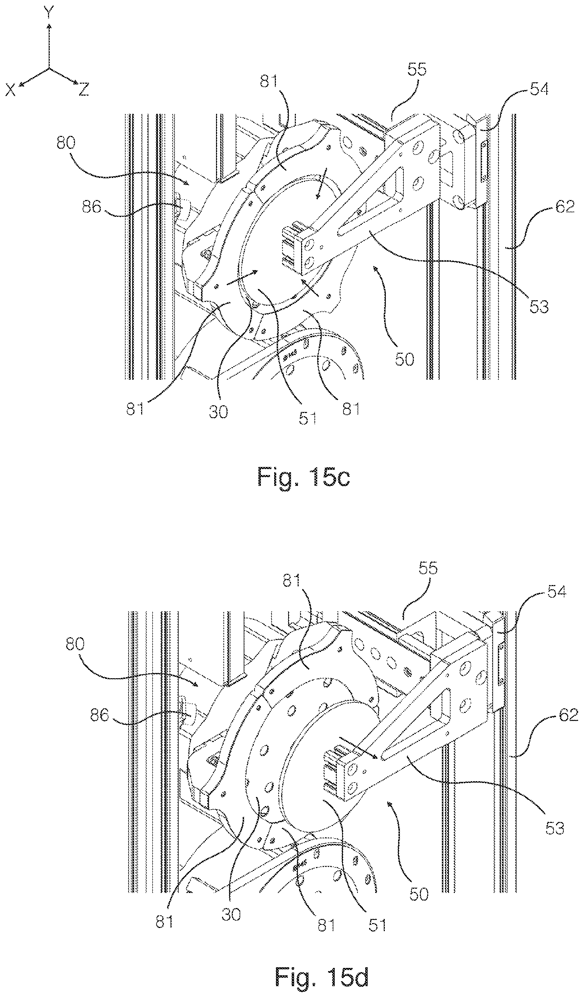

Thus, while the collar elements **81** are in the "open" position, the gripping device **50** may deliver an abrading product **30** in the vicinity of the plunger **82,** as illustrated sequentially in Figs. **15***a* and **15***b.*

The plunger **82,** in turn, is configured to be capable of controllably moving into contact and away from contact with the collar elements **81,** as illustrated in Figs. **12***a* and 1**2***b*. As a person skilled in the art readily understands, such a functionality may be brought about with a linear motor or a pneumatic cylinder arrangement (not illustrated), which may be housed within the housing **84.** The same applies to the movement of the collar elements **81** between the "open" and the "closed" position as described above.

Thereby, the plunger **82** and the collar elements **81** can work in a coordinated manner in pinching an abrading product **30** between the plunger **82** and the collar elements **81,** namely by moving the collar elements **81** into the "closed" position and thereafter moving the plunger **82** towards the collar elements **81** to such an extent that the abrading product **30** becomes squeezed, i.e. pinched, between the plunger **82** and the collar elements **81.** Towards such end, the outer circumference of the plunger **82** is to be greater than the circumference of the opening defined by the collar elements **81** in the "closed" position for the peripheral regions of the plunger **81** to come into the contact with the collar elements **82** - via the abrading product **30** if inserted therein.

Optionally, the loading device **80** may comprise a sensor **86,** for example an optical sensor **86,** adapted for detecting the presence and/or the absence of an abrading product **30** in the immediate vicinity of the plunger **82.** For such functionality, the plunger **82** may be provided with an aperture **85** through which the sensor **86** may detect the presence and/or the absence of an abrading product **30.** Such a sensor **86** provides the beneficial technical effect of providing the attacher **3** with a capability of detecting operating errors such as the loading device **80** failing to pinch an abrading article **30** as described above, in which case, for example, the detected failed operation may be retried instead of permitting the attaching process to erroneously proceed further possibly requiring manual intervention subsequently.

Consistently with the above, the loading device **80** may be configured to interact with the gripping device **50** as follows and as illustrated stepwise in Figs. **15***a* **to 15***d***.** Such process of interaction also constitutes a part of the method for attaching an abrading product **30** according to the disclosed solution, and thereby a method for providing the loading device **80** with an abrading product **30.**

First, and referring to Fig. **15***a**,* the gripping device **50,** with an abrading product **30** gripped onto the gripping plate **51,** moves, for example along the linear guide **62,** to a position at the loading device **80,** whereafter the loading device **80** moves the collar elements **81** into the "open" position if not already in this position. As a precondition to this step, the sensor **86** may be employed to verify that the loading device **80** is vacant to receive an abrading product **30,** i.e. that there is no abrading product **30** already in the immediate vicinity of the plunger **82.**

Next, and referring to Fig. **15***b**,*** the gripping device **50** with an abrading product **30** gripped moves, as effected by the second motion actuator **55,** the gripping plate **51** with the abrading product **30** past the collar elements **81** towards the plunger **82.** The sensor **86** may be employed to verify the consequent arrival of the abrading product **30** into the immediate vicinity of the plunger **82.** Alternatively, or in addition, the plunger **82** or the gripping device **50** may be provided with a force sensor adapted to indicate a physical contact between the gripping plate **51 -** here, with the abrading product **30** gripped - and the plunger **82.**

Next, and referring to Fig. **15***c**,* the collar elements **81** move radially inwards into the "closed" position. As already noted above, the abrading plate **51** is to be smaller in surface area than the abrading products **30** to be gripped and, furthermore, smaller in surface area than the inner opening defined by the collar elements **81** in the "closed" position in order to allow the abrading plate **51** to retract from between the collar elements **81** in the "closed" position so as to detach from the abrading product **30** - as described below.

Next, though not visible in Fig. **15***c**,* the plunger **82** moves towards the collar elements **81** to the point of providing sufficient force **F** for the abrading product **30** to be pinched between the plunger **82** and the collar elements **81.** To accommodate abrading products **30** of various thicknesses, the loading device **80** may be in communication via a communication pathway **91** with an instructions-giving device **90** such as a programmable logic which may provide the loading device **80** with information about the thickness of the abrading product **30** at the loading device **80** whereby the plunger **82** may be moved towards the collar elements **81** a distance suitable for the abrading product **30** at the loading device **80.** Alternatively, or in addition, the plunger **82** may be equipped with a force sensor capable of indicating when the pinching force exerted by the plunger **82** is sufficient whereby the movement of the plunger **82** towards the collar elements **81** may be discontinued.

Next, and referring to Fig. **15***d*, the abrading plate **51** retracts away from the loading device **80** leaving the abrading product **30** at the loading device **80** as pinched between the plunger **82** and the collar elements **81.**

Next, the gripping device **50** may move away from the position at the loading device **80,** whereby the abrading product **30** pinched at the loading device **80** becomes available for attaching to an abrading tool **4.**

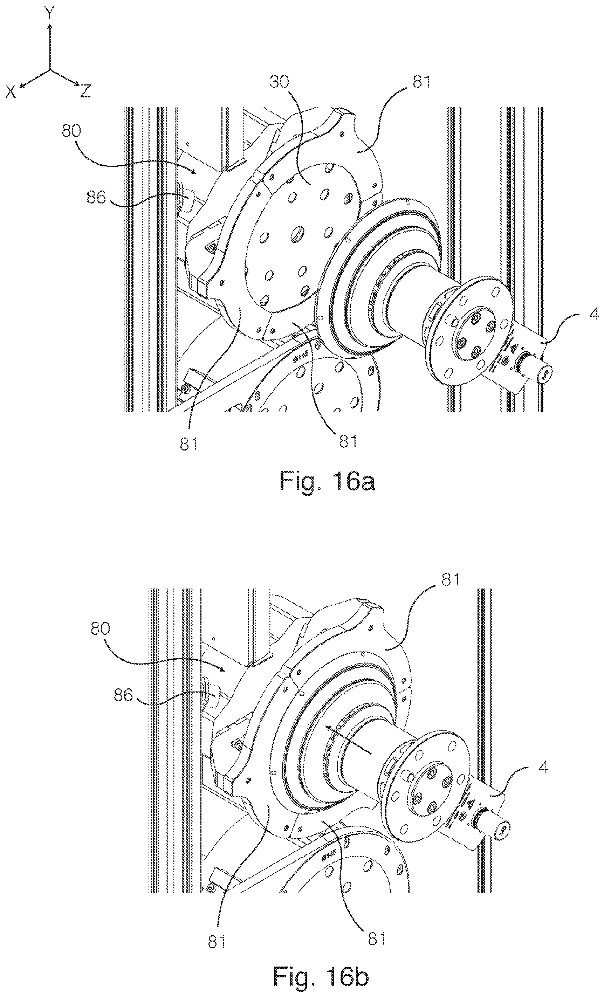

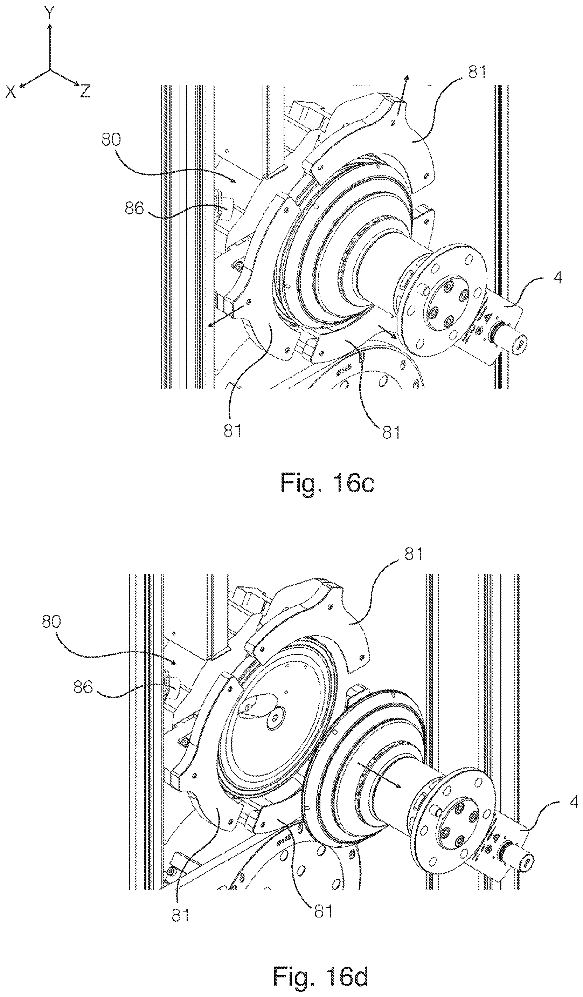

The loading device **80** may be configured to interact with an abrading tool **4** as follows and as illustrated stepwise in Figs. **16***a* **to 16***d**.*** Such process of interaction also constitutes a part of the method for attaching an abrading product **30** according to the disclosed solution, and thereby a method for providing the abrading tool **4** with an abrading product **30.**

As is obvious to a person skilled in the art, the following is premised on the abrading tool **4** not already having such an abrading product **30** as is to be attached - for example as a result of a previous such abrading product **30** having been detached with the detacher **2** as described above - but instead having a vacant gripping means **34** available to receive an abrading product **30** to be attached. Herein it must, however, be appreciated that the attaching procedure such as one described below may be performed more than once to furnish an abrading tool **4** with desired abrading products **30** such as first attaching an interface pad **32** and immediately thereafter attaching an abrasive article **31** before commissioning the abrading tool **4** for abrading.

First, and referring to Fig. **16***a**,*** the abrading tool **4** is moved - for example by an abrading robot **5** or equivalent (omitted from form Figs. **16***a* **to 16***d* for illustrative clarity) - to a position at the loading device **80** having an abrading product **30** pinched as described above and available for attaching to an abrading tool **4.**

Next, and referring to Fig. **16***b**,* the abrading tool **4** is moved towards and into contact with the abrading product **30.** To detect such contact, the plunger **82** of the loading device **80** and/or abrading robot **5** or equivalent having the abrading tool **4** may be provided with a force sensor or equivalent adapted to indicate a physical contact between the abrading tool **4** and the abrading product **30.** Upon such contact - and as is obvious to a person skilled in the art - the exposed gripping surface of the abrading product **30** becomes gripped onto the gripping means **34** on or attached to the abrading tool **4** such as the gripping surface of an interface pad **32** or a backing pad **33.** Thereby, the abrading tool **4** is equipped with the abrading product **30.**

Next, and referring to Fig. **16***c*, the collar elements **81** of the loading device **80** are moved to the "open" position, whereby the abrading product **30** is released from pinching between the collar elements **81** and the plunger **82** of the loading device **80.** To facilitate such releasing, the plunger **82** may be retracted away from the collar elements **81** before or simultaneously with moving the collar elements **81** to the "open" position.

Next, and referring to Fig. **16***d**,* the abrading tool **4** thusly equipped with the abrading product **30** retracts away from the loading device **80** and may be commissioned for abrading.

With reference to Fig. **11****,** the attacher **3** may, as an additional option, comprise means for providing machine vision capabilities such as a camera **70.** To enhance machine vision capabilities, the camera **70** may be accompanied with one or more flashes **71** for improved illumination. Such means, such as the camera **70** and the flash(es) **71** may be attached to the frame **60** or to an auxiliary frame **61** attached to the frame **60,** as is illustrated in Fig. **9****.**

Such means for providing machine vision capabilities **70,71** may be employed for highly advantageous purposes in case the attached abrading products **30** or at least some of them are perforated, i.e. comprise aperture patterns. As a person skilled in the art readily understands, in such a case, the abrading tool **4** most likely comprises also equivalent element(s), such as a backing pad **33,** comprising matching aperture patterns. In such a case, the above-mentioned aperture patterns require alignment, for example to allow efficient abrading debris extraction through aligned apertures.

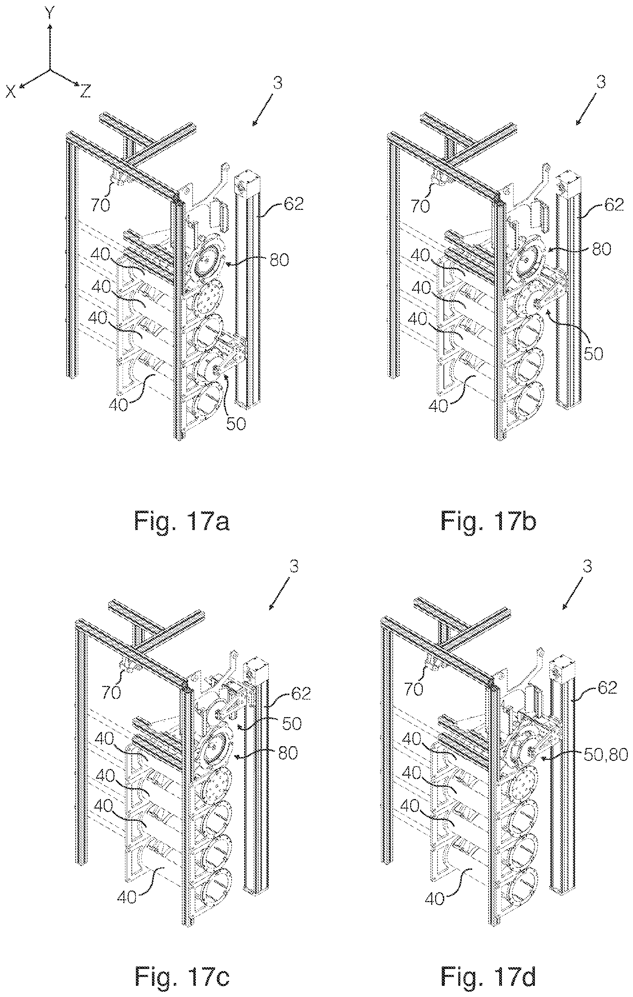

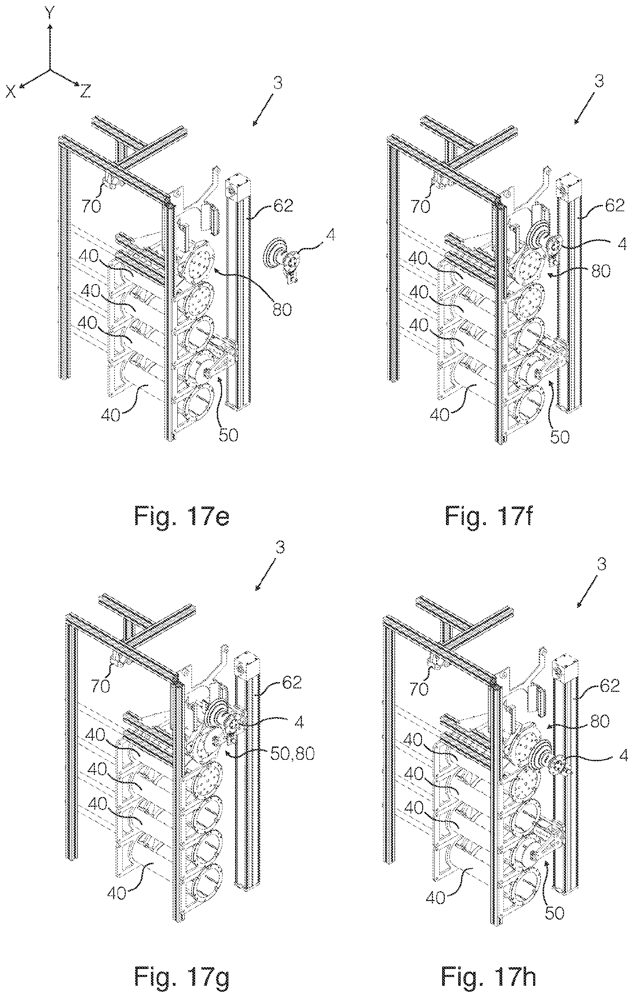

Firstly, the means for providing machine vision capabilities **70,71** may be employed for detecting aperture patterns in the abrading product **30** to be attached. Towards this end, the gripping device **50** may deliver the gripped abrading product **30** to a position at the machine vision capabilities such as the camera **70** and the flash(es) **71,** as illustrated in Fig. **17***c***,** wherein the aperture pattern and its rotational position on the abrading product **30** may be detected and communicated via a communication pathway **91** to an instructions-giving device **90** such as a programmable logic. Such detection may be performed, for example, as an additional step between the gripping device **50** picking up the abrading product **30** from a magazine **40** and the gripping device **50** depositing the abrading product to the loading device **80.**

As is apparent for a person skilled in the art, the instructions-giving device **90** may be provided with an algorithm such as an executable computer program for recording aperture locations as detected in the form of a photographic image by camera **70** and the flash(es) **71,** and subsequently storing these aperture locations in memory for subsequent use.

Secondly, the means for providing machine vision capabilities **70,71** may be employed for detecting aperture patterns in that element on or attached to an abrading tool **4** which is to receive an abrading product **30** to be attached. Towards this end, the abrading tool **4** may be brought to a position at the machine vision capabilities such as the camera **70** and the flash(es) **71,** as illustrated in Fig. **17***c***,** wherein said aperture pattern and its rotational position may be detected and communicated via a communication pathway **91** to an instructions-giving device **90** such as a programmable logic. Such detection may be performed, for example, as an additional step before bringing the abrading tool **4** at the loading device **80** for picking up the abrading product **30** to be attached.

With the aperture patterns in the abrading product **30** and on the abrading tool **4** thusly detected and recorded, the abrading tool **4** may be appropriately rotated and accurately positioned - for example by an robot **5** or equivalent device having the abrading tool **4** - so as to receive the abrading product **30** in such a manner that the aperture patterns in the abrading product **30** to be attached and on the abrading tool **4** become aligned. Towards this end, such rotating and positioning instructions may be communicated to the robot **5** or equivalent by the instructions-giving device **90** via a communication pathway **91.**

Such machine vision-based process may advantageously be employed also in the case of abrading products **30** not comprising any apertures for accurately positioning on the **X-Y** plane that element on or attached to an abrading tool **4** which is to receive an abrading product **30** to be attached.

In view of and consistently with the preceding, and with reference to Figs. **17***a* to **17***b*, the attaching of an abrading product **30** to an abrading tool **4** ready to receive the abrading product **30** may unfold stepwise as follows. Such a process also constitutes a method for attaching an abrading product **30** according to the disclosed solution.

First, and with reference to Figs. **17***a* and **17***b***,** the gripping device **50** is moved to a magazine **40** containing a desired abrading product **30,** whereafter the gripping device **50** grips that abrading product **30.**

Next, and with reference to Fig. **17***c*, in case the abrading product **30** comprises apertures, the gripping device **50** may be moved together with the abrading product **30** to the position comprising machine vision capabilities **70,71,** wherein the aperture pattern of the abrading product **30** may be recorded.

Next, and with reference to Fig. **17***d*, the gripping device **50** is moved together with the abrading product **30** to a loading device **80,** followed by having the loading device **80** pinch the abrading product **30,** whereafter the gripping device **50** is retracted away from the loading device **80** and the pinched abrading product **30,** and is then moved away from the loading device **80.**

Next, and with reference to Fig. **17***e* the abrading tool **4** is moved towards the attacher **3.** The possible device having the abrading tool **4** such as a robot **5** or equivalent is omitted for illustrative clarity from Figs. **17***e* to **17***b*.

Next, and with reference to Fig. **17***f*, in case the element on or attached to the abrading device **4** receiving the abrading product **30** comprises apertures, the abrading device **4** may be moved to the position comprising machine vision capabilities **70,71,** wherein the aperture pattern of said element on or attached to the abrading device **4** may be recorded. Followed by such recording, the abrading device **4** may be rotated so as to have said aperture pattern rotationally matched to that of the abrading product **30** in the loading device **80.**

In this pattern-detecting conjunction, and with reference to Fig. **11***b**,* the gripping device **50** may be equipped with a lower blinder arrangement **73** in order to enhance image quality in machine vision in which case the gripping device **50** may be moved next to the abrading tool **4** before recording the aperture pattern as described just above. In addition, or alternatively, there may be an upper blinder arrangement **72,** for example, as incorporated in a flash arrangement **71** as illustrated in Fig. **11***a* according to an example.

Next, and with reference to Fig. **17***b*, the abrading tool **4** is moved to the loading device **80,** whereafter the abrading tool **4** may be moved into contact with the abrading product **30,** followed by releasing the abrading product **30** form the loading device **80.**

Thereafter, the abrading tool **4** is moved away from the loading device and may be commissioned to abrading.

According to the disclosed solution, the attacher **3** may conduct the steps illustrated in Figs. **17***a* to **17***d***,** i.e. retrieve an abrading product **30** to be attached and place it in the loading device **80** in the absence of an abrading tool **4.** Thus, the attacher **3** according to the disclosed solution may beneficially prepare the next abrading product **30** to be attached - possibly from a variety of different abrading products **30** in different magazines **40** - ready for attaching already before the attaching has actualized.

It is to be appreciated that the same principles apply in the case the device 1 for changing abrading products **30** comprising the attacher **3** is utilized, as described above, by several abrading tools **4** such as several robots **5** or equivalent each equipped with an abrading tool **4.** In such a case, the attacher **3** loads in the loading device **80** the next abrading product **30** in a sequence of abrading products **30** due for the different abrading tools **4** - for example as instructed by the instructions-giving device **90** keeping record of such a sequence.

While the attacher **3** according to the disclosed solution may be configured so that its key elements, the magazine(s) **40** and the loading device **80** are vertically stacked with the gripping device **50** moving vertically, as illustrated in Fig. **9****,** any other orientation of configuration is equally possible while otherwise adhering to the principles set forth above. Moreover, by mounting the gripping device **50** on a robot or an equivalent 3-dimensionally moving arm arrangement provides even more freedom in the mutual placement of the magazine(s) **40** and the loading device **80** as well as other required attacher **3** elements, while otherwise adhering to the principles set forth above.

## Claims

1. A detacher (2) for detaching an abrading product (30) from an abrading tool (4), the detacher (2) comprising:
- a table (10) for receiving into contact the abrading product (30) as mounted to the gripping means (34) of the abrading tool (4), the abrading product having a thickness (t);
- a blade (14) adapted to penetrate into between the abrading product (30) and the gripping means (34) of the abrading tool (4); and
- means (16,18,19) to adjust the mutual distance (d) between the table (10) and the blade (14) to correspond to the thickness (t) of the abrading product (30),
**characterized in that**:
- said means (16) to adjust the mutual distance (d) comprise an actuator, wherein said means (16) to adjust the mutual distance (d) are operable in the absence of the abrading product (30), and
- said means (16) to adjust the mutual distance (d) are arranged to operate such that the distance (d) between the blade (14) and the table (10) remains the same or substantially the same over the entire surface area of the blade (14) regardless of the magnitude of the distance (d).

2. The detacher (2) according to claim 1, wherein the means (16,18,19) to adjust the mutual distance between the table (10) and the blade (14) comprise:
- a linear guide (19) connected to the table (10),
- a shaft (18) connected to the blade (14) and movably coupled with the linear guide (19), and
- the actuator (16) adapted to move the shaft (18) relative to the linear guide (19).

3. The detacher (2) according to claim 1 or 2, wherein the detacher (2) further comprises:
- a base (11), and
- one or more column arrangements (12,13) connecting the base (11) to the table (10) floatably such that the table (10) does not tilt in relation to the base (11) regardless of the mutual distance (h) between the base (11) and the table (10), in a situation where the blade (14) moves together with the table (10) in relation to the base (11).

4. The detacher (2) according to claim 3, wherein at least one of the one or more column arrangements (12,13) comprises:
- a hollow outer column (12),
- an inner column (13) movably coupled with the outer column (12) and capable of penetrating to inside the outer column (12),
- one or more springs (17) within the outer column (12) and resisting the penetrating movement of the inner column (13) to inside the outer column (12),
whereby the one or more springs (17) absorb an impact exerted by the abrading product (30) onto the table (10).

5. The detacher (2) according to any of the claims 1-4, the device (1) further comprising an instructions-giving device (90) in data communication via one or more communication pathways (91) with the detacher (2) at least for providing instructions for adjusting the mutual distance between the table (10) and the blade (14).

6. The detacher (2) according to claim 5, wherein the instructions-giving device (90) is in data communication via one or more communication pathways (91) with a camera (70) for recording an aperture pattern on the abrading product (30) and/or the gripping means (34) of an abrading tool (4) from an image captured with the camera (70).

7. A method for detaching an abrading product (30) from an abrading tool (4) by using a detacher (2), which comprises a table (10), a blade (14), and means (16,18,19) to adjust the mutual distance (d) between the table (10) and the blade (14),
the method comprising:
- adjusting the distance (d) between the table (10) and the blade (14) to correspond to a thickness (t) of the abrading product (30);
- receiving the abrading product (30) into contact with the table (10); and
- causing the blade (14) to penetrate into between the abrading product (30) and the gripping means (34) of the abrading tool (4),
**characterized in that**:
- said means (16) to adjust the mutual distance (d) comprise an actuator, wherein said means (16) to adjust the mutual distance (d) are operable in the absence of the abrading product (30), and
- said means (16) to adjust the mutual distance (d) are arranged to operate such that the distance (d) between the blade (14) and the table (10) remains the same or substantially the same over the entire surface area of the blade (14) regardless of the magnitude of the distance (d).

8. The method of claim 7, wherein said distance (d) is adjusted by using a linear guide (19), a shaft (18), and an actuator (16), wherein the linear guide (19) is connected to the table (10), the shaft (18) is connected to the blade (14), the shaft (18) is movably coupled with the linear guide (19), and the actuator (16) is adapted to move the shaft (18) relative to the linear guide (19).

9. The method according to claim 7 or 8, wherein one or more column arrangements (12,13) connect a base (11) to the table (10) floatably such that the table (10) does not tilt in relation to the base (11) regardless of the mutual distance (h) between the base (11) and the table (10), in a situation where the blade (14) moves together with the table (10) in relation to the base (11).

10. The method according to claim 9, wherein at least one of the one or more column arrangements (12,13) comprises:
- a hollow outer column (12),
- an inner column (13) movably coupled with the outer column (12) and capable of penetrating to inside the outer column (12),
- one or more springs (17) within the outer column (12) and resisting the penetrating movement of the inner column (13) to inside the outer column (12),
whereby the one or more springs (17) absorb an impact exerted by the abrading product (30) onto the table (10).

11. The method according to any of the claims 7 to 10, wherein an instructions-giving device (90) is in data communication, via one or more communication pathways (91), with the detacher (2) at least for providing instructions for adjusting the mutual distance between the table (10) and the blade (14).

## Patentansprüche

1. Ablöser (2) zum Ablösen eines Schleifprodukts (30) von einem Schleifwerkzeug (4), der Ablöser (2) umfassend:
- einen Tisch (10) zur Kontaktaufnahme mit dem Schleifprodukt (30), das an den Greifmitteln (34) des Schleifwerkzeugs (4) angebracht ist, wobei das Schleifprodukt eine Dicke (t) aufweist;
- eine Klinge (14), die dazu ausgelegt ist, zwischen das Schleifprodukt (30) und die Greifmittel (34) des Schleifwerkzeugs (4) einzudringen; und
- Mittel (16, 18, 19) zum Einstellen des gegenseitigen Abstands (d) zwischen dem Tisch (10) und der Klinge (14) entsprechend der Dicke (t) des Schleifprodukts (30)
**dadurch gekennzeichnet, dass:**
- die Mittel (16) zum Einstellen des gegenseitigen Abstands (d) einen Aktuator umfasst, wobei die Mittel (16) zum Einstellen des gegenseitigen Abstands (d) in Abwesenheit des Schleifprodukts (30) betätigbar sind, und
- die Mittel (16) zum Einstellen des gegenseitigen Abstands (d) so angeordnet sind, dass der Abstand (d) zwischen der Klinge (14) und dem Tisch (10) über die gesamte Oberfläche der Klinge (14) unabhängig von der Größe des Abstands (d) gleich oder im Wesentlichen gleich bleibt.

2. Ablöser (2) nach Anspruch 1, wobei die Mittel (16, 18, 19) zum Einstellen des gegenseitigen Abstands zwischen dem Tisch (10) und der Klinge (14) Folgendes umfassen:
- eine mit dem Tisch (10) verbundene Linearführung (19),
- eine Welle (18), die mit der Klinge (14) verbunden und beweglich mit der Linearführung (19) gekoppelt ist, und
- den Aktuator (16), der dazu ausgelegt ist, die Welle (18) relativ zur Linearführung (19) zu bewegen.

3. Ablöser (2) nach Anspruch 1 oder 2, wobei der Ablöser (2) ferner Folgendes umfasst:
- eine Basis (11) und
- eine oder mehrere Säulenanordnungen (12, 13), die die Basis (11) schwimmend mit dem Tisch (10) verbinden, sodass der Tisch (10) unabhängig vom gegenseitigen Abstand (h) zwischen der Basis (11) und dem Tisch (10) nicht in Bezug auf die Basis (11) kippt, in einer Situation, in der sich die Klinge (14) zusammen mit dem Tisch (10) in Bezug auf die Basis (11) bewegt.

4. Ablöser (2) nach Anspruch 3, wobei mindestens eine der einen oder mehreren Säulenanordnungen (12, 13) Folgendes umfasst:
- eine hohle Außensäule (12),
- eine Innensäule (13), die beweglich mit der Außensäule (12) verbunden ist und in das Innere der Außensäule (12) eindringen kann,
- eine oder mehrere Federn (17) innerhalb der Außensäule (12), die der Eindringbewegung der Innensäule (13) in das Innere der Außensäule (12) entgegenwirken, wobei die eine oder mehrere Federn (17) einen vom Schleifprodukt (30) auf den Tisch (10) ausgeübten Aufprall absorbieren.

5. Ablöser (2) nach einem der Ansprüche 1-4, die Vorrichtung (1) ferner umfassend eine Befehlsgebungsvorrichtung (90), die über einen oder mehrere Kommunikationswege (91) mit dem Ablöser (2) in Datenkommunikation steht, mindestens um Befehle zum Einstellen des gegenseitigen Abstands zwischen dem Tisch (10) und der Klinge (14) zu liefern.

6. Ablöser (2) nach Anspruch 5, wobei die Befehlsgebungsvorrichtung (90) über einen oder mehrere Kommunikationswege (91) mit einer Kamera (70) in Datenkommunikation steht, um ein Öffnungsmuster auf dem Schleifprodukt (30) und/oder den Greifmitteln (34) eines Schleifwerkzeugs (4) aus einem mit der Kamera (70) aufgenommenen Bild aufzuzeichnen.

7. Verfahren zum Ablösen eines Schleifprodukts (30) von einem Schleifwerkzeug (4) unter Verwendung eines Ablösers (2), der einen Tisch (10), eine Klinge (14) und Mittel (16, 18, 19) zum Einstellen des gegenseitigen Abstands (d) zwischen dem Tisch (10) und der Klinge (14) umfasst, das Verfahren umfassend:
- Einstellen des Abstands (d) zwischen dem Tisch (10) und der Klinge (14) entsprechend der Dicke (t) des Schleifprodukts (30);
- Kontaktaufnahme des Schleifprodukts (30) mit dem Tisch (10); und
- Veranlassen, dass die Klinge (14) zwischen das Schleifprodukt (30) und die Greifmittel (34) des Schleifwerkzeugs (4) eindringt,
**dadurch gekennzeichnet, dass:**
- die Mittel (16) zum Einstellen des gegenseitigen Abstands (d) einen Aktuator umfasst, wobei die Mittel (16) zum Einstellen des gegenseitigen Abstands (d) in Abwesenheit des Schleifprodukts (30) betätigbar sind, und
- die Mittel (16) zum Einstellen des gegenseitigen Abstands (d) so angeordnet sind, dass der Abstand (d) zwischen der Klinge (14) und dem Tisch (10) über die gesamte Oberfläche der Klinge (14) unabhängig von der Größe des Abstands (d) gleich oder im Wesentlichen gleich bleibt.

8. Verfahren nach Anspruch 7, wobei der Abstand (d) unter Verwendung einer Linearführung (19), einer Welle (18) und eines Aktuators (16) eingestellt wird, wobei die Linearführung (19) mit dem Tisch (10) verbunden ist, die Welle (18) mit der Klinge (14) verbunden ist, die Welle (18) beweglich mit der Linearführung (19) gekoppelt ist und der Aktuator (16) dazu ausgelegt ist, die Welle (18) relativ zur Linearführung (19) zu bewegen.

9. Verfahren nach Anspruch 7 oder 8, wobei eine oder mehrere Säulenanordnungen (12, 13) eine Basis (11) schwimmend mit dem Tisch (10) verbinden, sodass der Tisch (10) unabhängig vom gegenseitigen Abstand (h) zwischen der Basis (11) und dem Tisch (10) nicht in Bezug auf die Basis (11) kippt, in einer Situation, in der sich die Klinge (14) zusammen mit dem Tisch (10) in Bezug auf die Basis (11) bewegt.

10. Verfahren nach Anspruch 9, wobei mindestens eine der einen oder mehreren Säulenanordnungen (12, 13) Folgendes umfasst:
- eine hohle Außensäule (12),
- eine Innensäule (13), die beweglich mit der Außensäule (12) verbunden ist und in das Innere der Außensäule (12) eindringen kann,
- eine oder mehrere Federn (17) innerhalb der Außensäule (12), die der Eindringbewegung der Innensäule (13) in das Innere der Außensäule (12) entgegenwirken, wobei die eine oder mehrere Federn (17) einen vom Schleifprodukt (30) auf den Tisch (10) ausgeübten Aufprall absorbieren.

11. Verfahren nach einem der Ansprüche 7 bis 10, wobei eine Befehlsgebungsvorrichtung (90) über einen oder mehrere Kommunikationswege (91) mit dem Ablöser (2) in Datenkommunikation steht, mindestens um Befehle zum Einstellen des gegenseitigen Abstands zwischen dem Tisch (10) und der Klinge (14) zu liefern.

## Revendications

1. Détacheur (2) destiné à détacher un produit abrasif (30) d'un outil abrasif (4), le détacheur (2) comprenant :
- une table (10) pour recevoir en contact le produit abrasif (30) tel que monté sur les moyens de préhension (34) de l'outil abrasif (4), le produit abrasif ayant une épaisseur (t) ;
- une lame (14) conçue pour pénétrer entre le produit abrasif (30) et les moyens de préhension (34) de l'outil abrasif (4) ; et
- des moyens (16,18,19) pour régler la distance mutuelle (d) entre la table (10) et la lame (14) pour correspondre à l'épaisseur (t) du produit abrasif (30),
**caractérisé en ce que** :
- lesdits moyens (16) pour régler la distance mutuelle (d) comprennent un actionneur, dans lequel lesdits moyens (16) pour régler la distance mutuelle (d) peuvent fonctionner en l'absence du produit abrasif (30), et
- lesdits moyens (16) pour régler la distance mutuelle (d) sont agencés pour fonctionner de sorte que la distance (d) entre la lame (14) et la table (10) reste la même ou sensiblement la même sur toute la surface de la lame (14) quelle que soit l'amplitude de la distance (d).

2. Détacheur (2) selon la revendication 1, dans lequel les moyens (16, 18, 19) pour régler la distance mutuelle entre la table (10) et la lame (14) comprennent :
- un guide linéaire (19) relié à la table (10),
- un arbre (18) relié à la lame (14) et couplé de manière mobile au guide linéaire (19), et
- l'actionneur (16) étant conçu pour déplacer l'arbre (18) par rapport au guide linéaire (19).

3. Détacheur (2) selon la revendication 1 ou 2, dans lequel le détacheur (2) comprend en outre :
- une base (11), et
- un ou plusieurs agencements de colonnes (12,13) reliant la base (11) à la table (10) de manière flottante, de sorte que la table (10) ne s'incline pas par rapport à la base (11), quelle que soit la distance mutuelle (h) entre la base (11) et la table (10), dans une situation où la lame (14) se déplace avec la table (10) par rapport à la base (11).

4. Détacheur (2) selon la revendication 3, dans lequel au moins un des un ou plusieurs agencements de colonnes (12,13) comprend :
- une colonne externe creuse (12),
- une colonne interne (13) couplée de manière mobile à la colonne externe (12) et capable de pénétrer à l'intérieur de la colonne externe (12),
- un ou plusieurs ressorts (17) à l'intérieur de la colonne externe (12) et résistant au mouvement de pénétration de la colonne interne (13) à l'intérieur de la colonne externe (12),
moyennant quoi les un ou plusieurs ressorts (17) absorbent un impact exercé par le produit abrasif (30) sur la table (10).

5. Détacheur (2) selon l'une quelconque des revendications 1 à 4, le dispositif (1) comprenant en outre un dispositif de transmission d'instructions (90) en communication de données via une ou plusieurs voies de communication (91) avec le détacheur (2) au moins pour fournir des instructions de réglage de la distance mutuelle entre la table (10) et la lame (14).

6. Détacheur (2) selon la revendication 5, dans lequel le dispositif de transmission d'instructions (90) est en communication de données via une ou plusieurs voies de communication (91) avec une caméra (70) pour enregistrer un motif d'ouverture sur le produit abrasif (30) et/ou les moyens de préhension (34) d'un outil abrasif (4) à partir d'une image capturée avec la caméra (70).

7. Procédé de détachement d'un produit abrasif (30) d'un outil abrasif (4) à l'aide d'un détacheur (2), qui comprend une table (10), une lame (14) et des moyens (16,18,19) pour régler la distance mutuelle (d) entre la table (10) et la lame (14), le procédé comprenant :
- le réglage de la distance (d) entre la table (10) et la lame (14) pour correspondre à une épaisseur (t) du produit abrasif (30) ;
- la réception du produit abrasif (30) en contact avec la table (10) ; et
- le fait d'amener la lame (14) à pénétrer entre le produit abrasif (30) et les moyens de préhension (34) de l'outil abrasif (4),
**caractérisé en ce que** :
- lesdits moyens (16) pour régler la distance mutuelle (d) comprennent un actionneur, dans lequel lesdits moyens (16) pour régler la distance mutuelle (d) peuvent fonctionner en l'absence du produit abrasif (30), et
- lesdits moyens (16) pour régler la distance mutuelle (d) sont agencés pour fonctionner de sorte que la distance (d) entre la lame (14) et la table (10) reste la même ou sensiblement la même sur toute la surface de la lame (14) quelle que soit l'amplitude de la distance (d).

8. Procédé selon la revendication 7, dans lequel ladite distance (d) est réglée à l'aide d'un guide linéaire (19), d'un arbre (18) et d'un actionneur (16), dans lequel le guide linéaire (19) est relié à la table (10), l'arbre (18) est relié à la lame (14), l'arbre (18) est couplé de manière mobile au guide linéaire (19) et l'actionneur (16) est conçu pour déplacer l'arbre (18) par rapport au guide linéaire (19).

9. Procédé selon la revendication 7 ou 8, dans lequel un ou plusieurs agencements de colonnes (12,13) relient une base (11) à la table (10) de manière flottante, de sorte que la table (10) ne s'incline pas par rapport à la base (11), quelle que soit la distance mutuelle (h) entre la base (11) et la table (10), dans une situation où la lame (14) se déplace avec la table (10) par rapport à la base (11).

10. Procédé selon la revendication 9, dans lequel au moins un des un ou plusieurs agencements de colonnes (12,13) comprend :
- une colonne externe creuse (12),
- une colonne interne (13) couplée de manière mobile à la colonne externe (12) et capable de pénétrer à l'intérieur de la colonne externe (12),
- un ou plusieurs ressorts (17) à l'intérieur de la colonne externe (12) et résistant au mouvement de pénétration de la colonne interne (13) à l'intérieur de la colonne externe (12),
moyennant quoi les un ou plusieurs ressorts (17) absorbent un impact exercé par le produit abrasif (30) sur la table (10).

11. Procédé selon l'une quelconque des revendications 7 à 10, dans lequel un dispositif de transmission d'instructions (90) est en communication de données, via une ou plusieurs voies de communication (91), avec le détacheur (2) au moins pour fournir des instructions de réglage de la distance mutuelle entre la table (10) et la lame (14).
